# EUROPEAN PATENT APPLICATION

(11) **EP 4 610 142 A2**
(43) Date of publication of application: **03.09.2025**
(21) Application number: 25151643.1
(22) Date of filing: 14.01.2025
(51) Int. Cl.: B62B 7/12, B60N 2/28, B62B 9/20

(54) **CONVERTIBLE BABY SAFETY CAR SEAT ASSEMBLY**

(30) Priority: 15.01.2024 IL 31015524
(71) Applicant: Doona Holdings Ltd., Quarry Barry (HK)
(72) Inventor: MAZAR, Yoav, HONG KONG (HK)
(74) Representative: Lavoix

(57) **Abstract**

A convertible baby safety car seat assembly is disclosed, comprising an upper seat with a feet portion and a backrest portion, manipulable between an upright and an extended state. Legs of the car seat assembly are pivotable at least between a storage state and an operational state. Disclosed in connection with the car seat assembly are: an adjustable five-point harness for securing the baby to the seat; a lower support having reinforced regions for added strength; and a leg manipulation damping mechanism for slowing and smoothening pivoting movement of the legs. The assembly provides versatile configurations for improved safety, mobility, and ease of use.

## Description

### TECHNOLOGICAL FIELD

This invention relates to a baby safety car seat assembly, which can be used as a baby carrier and can be converted to become rollable for use, for example, as a stroller.

### BACKGROUND

A baby safety car seat assembly of the kind, to which the presently disclosed subject matter refers, is disclosed, for example, in US 8434781. It generally comprises legs having distal ends with wheels and is manipulable between a storage state in which the seat is configured to be mounted within a car, and an operational state allowing the seat assembly to be rolled by means of the wheels.

US9629476 discloses a device that can be converted from an infant sleeping bassinet to an infant or child seat. The device has a frame assembly and a seat structure supported by the frame assembly. The seat structure defines a seating surface and is movable between at least an inclined seating position and a reclined sleeping position.

### GENERAL DESCRIPTION

In accordance with one aspect of the presently disclosed subject matter there is provided a baby safety car seat assembly, comprising, at least in one operational mode thereof: an upper seat having a feet portion and a backrest portion; a lower support to which the upper seat is securely connected, the lower support having a front portion associated with the feet portion, a rear portion associated with the backrest portion, and right and left handle attachment areas; at least one reinforced region located between the rear and front portions of the lower support, the at least one reinforced region having a material and/or a structure different than a remaining body of the lower support; the at least one reinforced region rendering the lower support stronger than the lower support would be if it was free of said at least one reinforced region; at least one of said right and left handle attachment areas being located at least partially at the corresponding one of the at least one reinforced region; a handle connected to the lower support at the handle attachment areas by a pivotable attachment which enables pivoting of the handle between a plurality of different positions; and a car seat belt guiding member connected at least indirectly to the at least one reinforced region. The car seat belt guiding member can be connected to the reinforced region, such as via a belt guide connection portion that is fixedly connected to the reinforced region; or, in other embodiments, the car seat belt guiding member can be formed as part of the handle, and since the handle attachment area is at the reinforced region, the car seat belt guiding member is therefore indirectly attached to the reinforced region. In such arrangement, the car seat belt may further abut on the reinforced region, adjacent the handle. In both arrangements, the reinforced region at least partially bears the loads induced by the car seat belt on the seat assembly, especially under impact.

In some examples, the lower support can further comprise right and left leg attachment areas, at least one of said right and left leg attachment areas being located at least partially at the corresponding one of the at least one reinforced region. In some examples, each of the leg attachment areas at least partially overlaps with the corresponding handle attachment area, and optionally, fully overlaps. In those examples in which leg attachment areas are provided, the assembly further comprises legs having distal ends with wheels, and proximal ends which are connected at least indirectly to the lower support at said leg attachment areas, the legs being manipulable between a storage state in which the assembly is suitable for being mounted on a supporting surface, and an operational state allowing the seat assembly to be rolled by means of said wheels.

In accordance with another aspect of the presently disclosed subject matter there is provided a convertible baby safety car seat assembly comprising, at least in one operational mode thereof: a seat having a left-side leg attachment area and a right-side leg attachment area; a horizontal reference plane passing through a lowermost area of the seat; legs having wheels at their corresponding distal ends, the legs being pivotable between a storage state, in which at least the wheels are located above the reference plane and the assembly is suitable for being positioned on a supporting surface, and an operational state, in which at least the wheels are located below the reference plane so as to enable the seat assembly to be rolled by means of said wheels; said legs constituting a left pair of legs including a left rear leg and a left front leg and a right pair of legs including a right rear leg and a right front leg, at least one leg of the left pair of legs and at least one leg of the right pair of legs being pivotable from the storage state to the operational state at least partially under the influence of gravity; and a leg manipulation damping mechanism for damping at least a part of the pivoting movement, compared with that in which said at least one leg of each pair would pivot in the absence of the leg manipulation damping mechanism, thereby slowing and smoothening the pivoting movement of said at least one leg of each pair.

In accordance with yet another aspect of the presently disclosed subject matter there is provided a baby safety car seat assembly comprising, at least in an operational mode thereof: an upper seat having a feet portion and a backrest portion; the feet portion and the backrest portion being manipulable between an upright state, in which the backrest and feet portions form a first angle therebetween, and an extended state, in which the backrest and feet portions form a second angle therebetween, greater than the first angle, the upper seat comprising two, right and left backrest strap receiving slots; and two, right and left side strap receiving slots; a five-point harness for securing a baby in the upper seat when the baby is seated therein, the harness comprising: a central buckle, and at least one strap slidably passing through the strap receiving slots of the upper seat and connectable to the central buckle, the at least one strap comprising a securing portion available to be used for securing the baby in the upper seat and a fixing portion unavailable to be used for securing the baby; and a harness adjusting arrangement operable to adjust an effective length of at least the securing portion of the at least one strap upon manipulation of the upper seat between the upright state and the extended state.

A baby safety car seat assembly in accordance with any of the above aspects can have one or more of at least the following features in any combination thereof: Features associated with the reinforced region:
- the at least one reinforced region can comprise a belt guide connection portion to which the car seat belt guiding member is directly connected; or, the car seat belt guiding member can be formed as part of the handle, and located such that when a car seat belt is passed through, the car seat belt abuts on at least a top portion of the reinforced region, adjacent the car seat belt guiding member of the handle;
- the right handle attachment area and the right leg attachment area can overlap; and/or the left handle attachment area and the left leg attachment area can overlap;
- the right and left handle attachment areas and the right and left leg attachment areas can be fully located at the corresponding one of the at least one reinforced region;
- the at least one reinforced region can comprise a fiber-reinforced material;
- the at least one reinforced region can extend further in a lateral direction as compared to the remaining body thereby constituting an outermost region of the lower support;
- the at least one reinforced region can be in the form of a reinforced element securely mounted to the remaining body of the lower support;
- the at least one reinforced region can have a cellular structure configured to provide an enhanced strength thereto;
- a side protection module can be provided and attachable so as to at least partially overlap a corresponding one of the at least one reinforced region in a lateral direction;
- the at least one reinforced region can constitute a part of at least the side walls of the lower support and thereby potentially increase the resistance of the safety car seat to impact, for example, to side impact.
Features associated with the damping mechanism:
- the leg manipulation damping mechanism can comprise a gear arrangement, or more generally, a toothed arrangement structured to absorb or dissipate at least a part of the energy associated with pivoting of the legs under gravity. The mechanism can include toothed elements which engage each other to provide a limited resistance to the movement;
- the leg manipulation damping mechanism can comprise a first part associated with one of the leg and the leg attachment area and a second part associated with the other one of the leg attachment area and the leg, and operatively engaging the first part;
- the leg manipulation damping mechanism can comprise a rack and pinion arrangement, and the first part includes a rack and the second part includes a pinion;
- the leg manipulation damping mechanism can comprise a left damping mechanism and a right damping mechanism corresponding with the left pair of legs and the right pair of legs;
- a locking mechanism can be provided, the locking mechanism operable to lock the left rear leg with respect to the left front leg, and the right rear leg with respect to the right front leg, causing the legs of each pair to move together at least during said part of said pivoting movement;
- the leg manipulation damping mechanism can be operable only along said part of said pivoting movement; optionally, a remaining part of the pivoting movement is carried out without damping, i.e. with low or no resistance to the movement of the legs;
- the leg manipulation damping mechanism can be operable only in a single direction of pivoting of the legs. That is, during movement of the legs from their storage state to an operable state, the damping mechanism at least partially resists movement of the legs under gravity, slowing and smoothening their movement. When moving the legs in the other direction, from the operable state to the storage state, there is no resistance to the movement;
- the leg manipulation damping mechanism is operable to dampen the pivoting movement of the legs independently of movement of a handle of the safety seat. Although the handle and the legs can be connected at similar or overlapping areas, the leg manipulation damping mechanism is configured to effect only the pivoting of the legs. This can be potentially advantageous in that the handle can remain at a selected position (e.g. a carrier state, a storage state, a stroller state) while the legs are manipulated and pivoted. For example, during movement of the legs from the storage state to the operable state, the handle can be at a carrier state or a stroller state, allowing a user to hold on to the handle while the legs are slowly and smoothly deployed, as a result of being dampened by the damping mechanism;
- the locking mechanism can be operable to unlock the legs of each of said pairs of legs from each other after the completion of said part of the pivoting movement;
- the locking mechanism can be operable to lock one, first leg of each pair in its operational state, wherein the assembly can further comprise an actuating arrangement operable to move the other, second leg of the same pair away from the first leg, when the legs are unlocked from each other;
Features associated with the harness adjusting arrangement:
- the harness adjusting arrangement can be configured so that adjustment of the effective length of the securing portion is enabled by adjustment of an effective length of the fixing portion of the at least one strap;
- the securing portion can comprise: shoulder securing portions; hip securing portions; and a crotch securing portion; wherein the adjustment in effective length initiates at the hip securing portions. For example, the strap segment which effectively becomes a part of the securing portion instead of the fixing portion is released initially at the side strap receiving slots, which are located adjacent the hips of the infant. Then, the strap can be pulled on (for example in response to the infant's shoulders pulling on it as the upper seat extends backwards), such that the released strap segment provides the length required to secure the infant comfortably and without being too tight;
- initial adjustment of the strap therefore occurs at two spaced apart locations, namely the side strap receiving slots, simultaneously in response to manipulation of the upper seat. This may be potentially advantageous in that the adjustment can be carried out quickly, for example as compared to adjustment initiated (or fully carried out) at a single location only. An additional potential advantage of the adjustment being initiated at the hip securing portions may include that the buckle is not directly affected by the adjustment and remains in a similar position with respect to the infant, before and after the adjustment;
- the harness adjusting arrangement can, upon manipulation of the upper seat from the upright state to the extended state, increase the effective length of the securing portion of the at least one strap;
- the harness adjusting arrangement can, upon manipulation of the upper seat from the upright state to the extended state, decrease the effective length of the fixing portion of the at least one strap;
- the harness adjusting arrangement can, upon manipulation of the upper seat from the extended state to the upright state, decrease the effective length of the securing portion of the at least one strap;
- the harness adjusting arrangement can, upon manipulation of the upper seat from the extended state to the upright state, increase the effective length of the fixing portion of the at least one strap;
- a total strap length of the at least one strap can remain constant at least during the manipulation of the upper seat between the upright state and the extended state;
- the strap can extend along a total strap path, said harness adjusting arrangement being operable to modify the total strap path upon manipulation of the upper seat between the upright state and the extended state, for adjusting the effective length of the securing portion of the at least one strap;
- a moveable part can be provided, the movable part operable to move upon manipulation of the upper seat between the upright state and the extended state, said strap extending at least partially over the moveable part such that the moveable part constitutes at least a part of the total strap path, said moveable part constituting at least partially the harness adjusting arrangement, wherein said movement of the moveable part modifies the total strap path thereby adjusting the effective length of the securing portion of the at least one strap;
- the upper seat can comprise a front-facing portion for seating the baby therein and an opposite rear-facing portion, said strap receiving slots establishing connection paths between said front-facing and rear-facing portions, wherein the at least one strap is slidably passed through the strap receiving slots between the front-facing and rear-facing portions with the securing portion being positioned at the front-facing portion and the fixing portion being positioned at the rear-facing portion;
- a lower support can be provided, said upper seat being connected to the lower support and having its rear-facing portion facing the lower support, the lower support having a front portion associated with the feet portion, a rear portion associated with the backrest portion, and right and left side portions, wherein the at least one strap is fixedly connected to the lower support;
- during the manipulation of the upper seat between the upright state and the extended state, at least one of the backrest portion and the feet portion can change its position with respect to the lower support; the harness adjusting arrangement, upon manipulation of the upper seat between the upright state and the extended state, can adjust the effective length of at least the securing portion of the at least one strap in accordance with said at least one of the backrest portion and the feet portion changing its position with respect to the lower support;
- during the manipulation of the upper seat between the upright state and the extended state, both the feet portion and the backrest portion can change their position with respect to the lower support; and wherein the fixing portion of the at least one strap abuts the feet portion such that said change in position of the feet portion reduces or increases a length of a path along which said fixing portion extends, thereby adjusting the effective length of the fixing portion.

The above-described aspects and features of the presently disclosed subject matter as well as additional aspects and features are further specified in embodiments of the presently disclosed subject matter presented below.
1. A baby safety car seat assembly, comprising, at least in one operational mode thereof:
   an upper seat having a feet portion and a backrest portion;
   a lower support to which the upper seat is securely connected, the lower support having a front portion associated with the feet portion, a rear portion associated with the backrest portion, and right and left handle attachment areas;
   at least one reinforced region located between the rear and front portions of the lower support, the at least one reinforced region having a material and/or a structure different than a remaining body of the lower support; the at least one reinforced region rendering the lower support stronger than the lower support would be if it was free of said at least one reinforced region;
   at least one of said right and left handle attachment areas being located at least partially at the corresponding one of the at least one reinforced region;
   a handle connected to the lower support at the handle attachment areas by a pivotable attachment which enables pivoting of the handle between a plurality of different positions; and
   a car seat belt guiding member connected at least indirectly to the at least one reinforced region.
2. The baby safety car seat assembly according to Embodiment 1, wherein the at least one reinforced region comprises a belt guide connection portion to which the car seat belt guiding member is directly connected.
3. The baby safety car seat assembly according to Embodiment 1, wherein the car seat belt guiding member is formed as part of the handle, and located such that when a car seat belt is passed through, the car seat belt abuts on at least a top portion of the reinforced region, adjacent the car seat belt guiding member of the handle.
4. The baby safety car seat assembly according to Embodiment 1, wherein the lower support further comprises right and left leg attachment areas, at least one of said right and left leg attachment areas being located at least partially at the corresponding one of the at least one reinforced region; the assembly further comprising legs having distal ends with wheels, and proximal ends which are connected at least indirectly to the lower support at said leg attachment areas, the legs being manipulable between a storage state in which the assembly is suitable for being mounted on a supporting surface, and an operational state allowing the seat assembly to be rolled by means of said wheels.
5. The baby safety car seat assembly according to Embodiment 4, wherein the right handle attachment area and the right leg attachment area overlap; and the left handle attachment area and the left leg attachment area overlap.
6. The baby safety car seat assembly according to Embodiment 4 or 5, wherein the right and left handle attachment areas and the right and left leg attachment areas are fully located at the corresponding one of the at least one reinforced region.
7. The baby safety car seat assembly according to any one of Embodiments 1 to 7, wherein the at least one reinforced region comprises a fiber-reinforced material.
8. The baby safety car seat assembly according to any one of Embodiments 1 to 7, wherein the at least one reinforced region extends further in a lateral direction as compared to the remaining body thereby constituting an outermost region of the lower support.
9. The baby safety car seat assembly according to any one of Embodiments 1 to 8, wherein the at least one reinforced region is in the form of a reinforced element securely mounted to the remaining body of the lower support.
10. The baby safety car seat assembly according to any one of Embodiments 1 to 9, wherein the at least one reinforced region has a cellular structure configured to provide an enhanced strength thereto.
11. The baby safety car seat assembly according to any one of Embodiments 1 to 10, further comprising a side protection module attachable so as to at least partially overlap a corresponding one of the at least one reinforced region in a lateral direction.
12. The baby safety car seat assembly according to any one of Embodiments 1 to 11, wherein the feet portion and the backrest portion are manipulable between an upright state, in which the backrest and feet portions form a first angle therebetween, and an extended state, in which the backrest and feet portions form a second angle therebetween greater than the first angle.
13. The baby safety car seat assembly according to Embodiment 4 or any one of Embodiments 5 to 12, when dependent on Embodiment 4, said legs constituting a left pair of legs including a left rear leg and a left front leg and a right pair of legs including a right rear leg and a right front leg, at least one leg of the left pair of legs and at least one leg of the right pair of legs being pivotable from the storage state to the operational state at least partially under the influence of gravity; wherein the baby safety car seat assembly further comprises a leg manipulation damping mechanism for damping at least a part of the pivoting movement, compared with that in which said at least one leg of each pair would pivot in the absence of the leg manipulation damping mechanism, thereby slowing and smoothening the pivoting movement of said at least one leg of each pair.
14. The baby safety car seat assembly according to any one of Embodiments 1 to 13, the feet portion and the backrest portion being manipulable between an upright state, in which the backrest and feet portions form a first angle therebetween, and an extended state, in which the backrest and feet portions form a second angle therebetween, greater than the first angle, the upper seat comprising two, right and left backrest strap receiving slots; and two, right and left side strap receiving slots; wherein the baby safety car seat assembly further comprises:
   a five-point harness for securing a baby in the upper seat when the baby is seated therein, the harness comprising: a central buckle, and at least one strap slidably passing through the strap receiving slots of the upper seat and connectable to the central buckle, the at least one strap comprising a securing portion available to be used for securing the baby in the upper seat and a fixing portion unavailable to be used for securing the baby; and
   a harness adjusting arrangement operable to adjust an effective length of at least the securing portion of the at least one strap upon manipulation of the upper seat between the upright state and the extended state.
15. The baby safety car seat assembly according to any one of Embodiments 1 to 14, wherein the lower support comprises side walls located between the rear portion and the front portion, and the at least one reinforced region comprises two reinforced regions respectively located at said side walls.
16. A convertible baby safety car seat assembly comprising, at least in one operational mode thereof:
   a seat having a left-side leg attachment area and a right-side leg attachment area;
   a horizontal reference plane passing through a lowermost area of the seat;
   legs having wheels at their corresponding distal ends, the legs being pivotable between a storage state, in which at least the wheels are located above the reference plane and the assembly is suitable for being positioned on a supporting surface, and an operational state, in which at least the wheels are located below the reference plane so as to enable the seat assembly to be rolled by means of said wheels;
   said legs constituting a left pair of legs including a left rear leg and a left front leg and a right pair of legs including a right rear leg and a right front leg, at least one leg of the left pair of legs and at least one leg of the right pair of legs being pivotable from the storage state to the operational state at least partially under the influence of gravity; and
   a leg manipulation damping mechanism for damping at least a part of the pivoting movement, compared with that in which said at least one leg of each pair would pivot in the absence of the leg manipulation damping mechanism, thereby slowing and smoothening the pivoting movement of said at least one leg of each pair.
17. The convertible baby safety car seat assembly according to Embodiment 16, wherein the leg manipulation damping mechanism comprises a gear arrangement.
18. The convertible baby safety car seat assembly according to Embodiment 16 or 17, wherein the leg manipulation damping mechanism comprises a first part associated with one of the leg and the leg attachment area and a second part associated with the other one of the leg attachment area and the leg, and operatively engaging the first part.
19. The convertible baby safety car seat assembly according to Embodiment 18, wherein the leg manipulation damping mechanism comprises a rack and pinion arrangement, and the first part includes a rack and the second part includes a pinion.
20. The convertible baby safety car seat assembly according to any one of Embodiments 16 to 19, wherein the leg manipulation damping mechanism comprises a left damping mechanism and a right damping mechanism corresponding with the left pair of legs and the right pair of legs.
21. The convertible baby safety car seat assembly according to any one of Embodiments 16 to 20, further comprising a locking mechanism operable to lock the left rear leg with respect to the left front leg, and the right rear leg with respect to the right front leg, causing the legs of each pair to move together at least during said part of said pivoting movement.
22. The convertible baby safety car seat assembly according to Embodiment 21, wherein said leg manipulation damping mechanism is operable only along said part of said pivoting movement.
23. The convertible baby safety car seat assembly according to Embodiment 21 or 22, said locking mechanism is operable to unlock the legs of each of said pairs of legs from each other after the completion of said part of the pivoting movement.
24. The convertible baby safety car seat assembly according to any one of Embodiments 21 to 23, wherein said locking mechanism is operable to lock one, first leg of each pair in its operational state, wherein the assembly further comprises an actuating arrangement operable to move the other, second leg of the same pair away from the first leg, when the legs are unlocked from each other.
25. The convertible baby safety car seat assembly according to any one of Embodiments 16 to 24, wherein the seat comprises:
   an upper seat having a feet portion and a backrest portion; and
   a lower support to which the upper seat is securely connected, the lower support having a front portion associated with the feet portion, a rear portion associated with the backrest portion, and right and left handle attachment areas;
   wherein the convertible baby safety car seat assembly further comprises:
      at least one reinforced region located between the rear and front portions of the lower support, the at least one reinforced region having a material and/or a structure different than a remaining body of the lower support; the at least one reinforced region rendering the lower support stronger than the lower support would be if it was free of said at least one reinforced region;
      at least one of said right and left handle attachment areas being located at least partially at the corresponding one of the at least one reinforced region;
      a handle connected to the lower support at the handle attachment areas by a pivotable attachment which enables pivoting of the handle between a plurality of different positions; and
      a car seat belt guiding member connected at least indirectly to the at least one reinforced region.
26. The convertible baby safety car seat assembly according to any one of Embodiments 16 to 25, wherein the seat comprises an upper seat having a feet portion and a backrest portion; the feet portion and the backrest portion being manipulable between an upright state, in which the backrest and feet portions form a first angle therebetween, and an extended state, in which the backrest and feet portions form a second angle therebetween, greater than the first angle, the upper seat comprising two, right and left backrest strap receiving slots; and two, right and left side strap receiving slots;
   wherein the convertible baby safety car seat assembly further comprises:
   a five-point harness for securing a baby in the upper seat when the baby is seated therein, the harness comprising: a central buckle, and at least one strap slidably passing through the strap receiving slots of the upper seat and connectable to the central buckle, the at least one strap comprising a securing portion available to be used for securing the baby in the upper seat and a fixing portion unavailable to be used for securing the baby; and
   a harness adjusting arrangement operable to adjust an effective length of at least the securing portion of the at least one strap upon manipulation of the upper seat between the upright state and the extended state.
27. The convertible baby safety car seat assembly according to any one of Embodiments 16 to 26, wherein the leg manipulation damping mechanism is operable only during pivoting of the legs from the storage state to the operational state, and not vice versa.
28. The convertible baby safety car seat assembly according to Embodiment 16, further comprising a handle connected to the seat by a pivotable attachment which enables pivoting of the handle between a plurality of different positions, wherein the leg manipulation damping mechanism is operable during pivoting of the legs, independently of pivoting of the handle.
29. A baby safety car seat assembly comprising, at least in an operational mode thereof:
   an upper seat having a feet portion and a backrest portion; the feet portion and the backrest portion being manipulable between an upright state, in which the backrest and feet portions form a first angle therebetween, and an extended state, in which the backrest and feet portions form a second angle therebetween, greater than the first angle, the upper seat comprising two, right and left backrest strap receiving slots; and two, right and left side strap receiving slots;
   a five-point harness for securing a baby in the upper seat when the baby is seated therein, the harness comprising: a central buckle, and at least one strap slidably passing through the strap receiving slots of the upper seat and connectable to the central buckle, the at least one strap comprising a securing portion available to be used for securing the baby in the upper seat and a fixing portion unavailable to be used for securing the baby; and
   a harness adjusting arrangement operable to adjust an effective length of at least the securing portion of the at least one strap upon manipulation of the upper seat between the upright state and the extended state, wherein adjustment is initiated at the right and left side receiving slots.
30. The baby safety car seat assembly according to Embodiment 29, wherein the harness adjusting arrangement is configured so that the adjustment of the effective length of the securing portion is enabled by adjustment of an effective length of the fixing portion of the at least one strap.
31. The baby safety car seat assembly according to Embodiment 29 or 30, wherein the securing portion comprises: shoulder securing portions; hip securing portions; and a crotch securing portion; and wherein the hip securing portions are adjusted first.
32. The baby safety car seat assembly according to any one of Embodiments 29 to 31, wherein the harness adjusting arrangement, upon manipulation of the upper seat from the upright state to the extended state, increases the effective length of the securing portion of the at least one strap.
33. The baby safety car seat assembly according to any one of Embodiments 29 to 32, wherein the harness adjusting arrangement, upon manipulation of the upper seat from the upright state to the extended state, decreases the effective length of the fixing portion of the at least one strap.
34. The baby safety car seat assembly according to any one of Embodiments 29 to 33, wherein the harness adjusting arrangement, upon manipulation of the upper seat from the extended state to the upright state, decreases the effective length of the securing portion of the at least one strap.
35. The baby safety car seat assembly according to any one of Embodiments 29 to 34, wherein the harness adjusting arrangement, upon manipulation of the upper seat from the extended state to the upright state, increases the effective length of the fixing portion of the at least one strap.
36. The baby safety car seat assembly according to any one of Embodiments 29 to 35, wherein a total strap length of the at least one strap remains constant at least during the manipulation of the upper seat between the upright state and the extended state.
37. The baby safety car seat assembly according to any one of Embodiments 29 to 36, wherein the strap extends along a total strap path, said harness adjusting arrangement being operable to modify the total strap path upon manipulation of the upper seat between the upright state and the extended state, for adjusting the effective length of the securing portion of the at least one strap.
38. The baby safety car seat assembly according to Embodiment 37, comprising a moveable part operable to move upon manipulation of the upper seat between the upright state and the extended state, said strap extending at least partially over the moveable part such that the moveable part constitutes at least a part of the total strap path, said moveable part constituting at least partially the harness adjusting arrangement, wherein said movement of the moveable part modifies the total strap path thereby adjusting the effective length of the securing portion of the at least one strap.
39. The baby safety car seat assembly according to Embodiment 38, wherein movement of the moveable part modifies the total strap path at two spaced apart locations adjacent the right and left side receiving slots.
40. The baby safety car seat assembly according to any one of Embodiments 29 to 39, wherein the upper seat comprises a front-facing portion for seating the baby therein and an opposite rear-facing portion, said strap receiving slots establishing connection paths between said front-facing and rear-facing portions, wherein the at least one strap is slidably passed through the strap receiving slots between the front-facing and rear-facing portions with the securing portion being positioned at the front-facing portion and the fixing portion being positioned at the rear-facing portion.
41. The baby safety car seat assembly according to Embodiment 40, further comprising a lower support, said upper seat being connected to the lower support and having its rear-facing portion facing the lower support, the lower support having a front portion associated with the feet portion, a rear portion associated with the backrest portion, and right and left side portions, wherein the at least one strap is fixedly connected to the lower support.
42. The baby safety car seat assembly according to Embodiment 41, wherein during the manipulation of the upper seat between the upright state and the extended state, at least one of the backrest portion and the feet portion changes its position with respect to the lower support.
43. The baby safety car seat assembly according to Embodiment 42, wherein the harness adjusting arrangement, upon manipulation of the upper seat between the upright state and the extended state, adjusts the effective length of at least the securing portion of the at least one strap in accordance with said at least one of the backrest portion and the feet portion changing its position with respect to the lower support.
44. The baby safety car seat assembly according to Embodiment 43, wherein during the manipulation of the upper seat between the upright state and the extended state, both the feet portion and the backrest portion change their position with respect to the lower support; and wherein the fixing portion of the at least one strap abuts the feet portion such that said change in position of the feet portion reduces or increases a length of a path along which said fixing portion extends, thereby adjusting the effective length of the fixing portion.
45. The baby safety car seat assembly according to any one of Embodiments 29 to 44, further comprising:
   a lower support to which the upper seat is securely connected, the lower support having a front portion associated with the feet portion, a rear portion associated with the backrest portion, and a strap fixing portion; and
   at least one reinforced region located between the rear and front portions of the lower support, the at least one reinforced region having a material and/or a structure different than a remaining body of the lower support; the at least one reinforced region rendering the lower support stronger than the lower support would be if it was free of said at least one reinforced region.

### BRIEF DESCRIPTION OF THE DRAWINGS

In order to better understand the subject matter that is disclosed herein and to exemplify how it may be carried out in practice, embodiments will now be described, by way of non-limiting examples only, with reference to the accompanying drawings, in which:
**Fig. 1A, 1B****,** **1C** and **1D** illustrate a side view of a baby safety car seat assembly according to one example of the presently disclosed subject matter, in: a car seat mounting or storage mode; an extended stroller mode; an upright stroller mode; and a rollable carrier mode, which the assembly can be used in;
**Fig. 2A** is a rear perspective view of a baby safety car seat assembly with its upper seat not shown for illustration purposes, according to one example of the presently disclosed subject matter;
**Fig. 2B** is a closer view of area A1 of Fig. 2A;
**Fig. 2C** is a rear perspective view of a lower support, which can be used in a baby safety car seat assembly according to one example of the presently disclosed subject matter;
**Fig. 2D** is a front perspective view of a reinforced region, which can be used in a baby safety car seat assembly according to one example of the presently disclosed subject matter;
**Fig. 2E** is a rear perspective view of the reinforced region shown in Fig. 2D;
**Fig. 2F** is a rear perspective view schematically showing a baby safety car seat assembly in a storage mode according to one example of the presently disclosed subject matter, with a side protection module;
**Fig. 2G** is a perspective view of a handle, which can be used in a baby safety car seat assembly according to one example of the presently disclosed subject matter;
**Fig. 3A** is a side perspective view of a baby safety car seat assembly with its upper seat not shown for illustration purposes, according to one example of the presently disclosed subject matter;
**Fig. 3B** is a perspective cutaway side view of the baby safety car seat assembly shown in Fig. 3A as seen in the direction A-A in Fig. 3A, which is perpendicular to the cutting-away plane;
**Fig. 3C** is a closer view of area B1 of Fig. 3B;
**Fig. 3D** is a side view of a baby safety car seat assembly, according to one example of the presently disclosed subject matter, showing a damping mechanism in a first position corresponding to the storage state of its legs;
**Fig. 3E** is a side view of a baby safety car seat assembly, according to one example of the presently disclosed subject matter, showing the damping mechanism in a second position corresponding to the operational state of its legs;
**Fig. 3F** is a partial perspective view of a leg of a baby safety car seat assembly, showing the damping mechanism;
**Figs. 4A** to **4C** are exploded perspective views of an assembly of the front and rear legs of the baby safety car seat assembly of Figs. 1A to 3E;
**Fig. 5A** is a front perspective view of an upper seat without a covering, which can be used in a baby safety car seat assembly according to one example of the presently disclosed subject matter, the upper seat being in its upright state;
**Fig. 5B** is a side view of the upper seat of Fig. 5A;
**Fig. 5C** is a perspective cutaway side view of the upper seat shown in Fig. 5A as seen in the direction B-B in Fig. 5A, which is perpendicular to the cutting-away plane;
**Fig. 5D** is a front perspective view of the upper seat shown in Figs. 5A to 5C, the upper seat being in its extended state;
**Fig. 5E** is a side view of the upper seat of Fig. 5D;
**Fig. 6A** is a front perspective view of a baby safety car seat assembly according to one example of the presently disclosed subject matter;
**Fig. 6B** is a perspective cutaway view of the baby safety car seat assembly shown in Fig. 6A as seen in the direction C-C in Fig. 6A, which is perpendicular to the cutting-away plane;
**Fig. 6C** is a closer view of area C1 of Fig. 6B;
**Fig. 6D** is a partial cutaway front view of the baby safety car seat assembly shown in Fig. 6A, with the upper seat being in its upright state; and
**Fig. 6E** is the same view as Fig. 6D, with the upper seat being in its extended state.

### DETAILED DESCRIPTION OF EMBODIMENTS

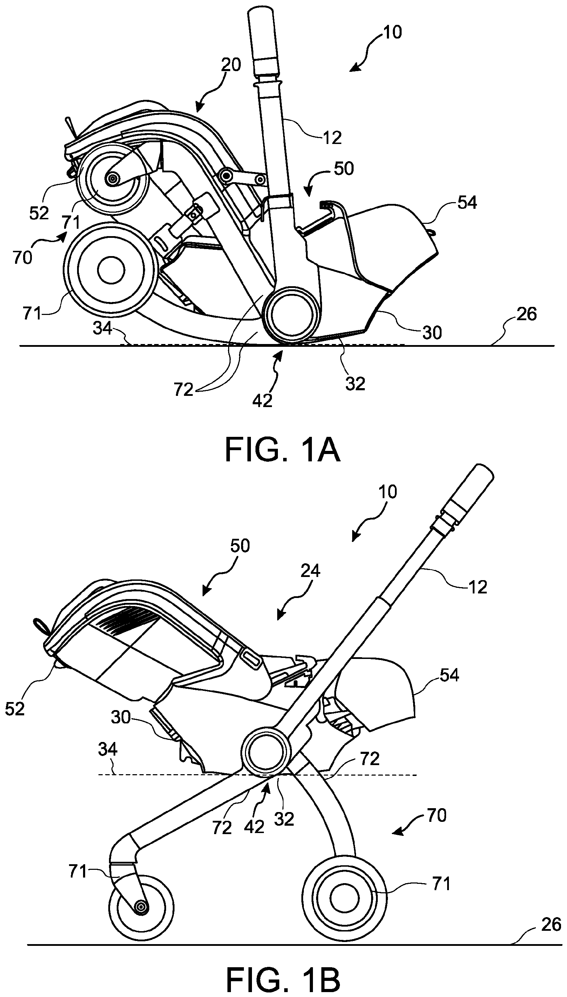

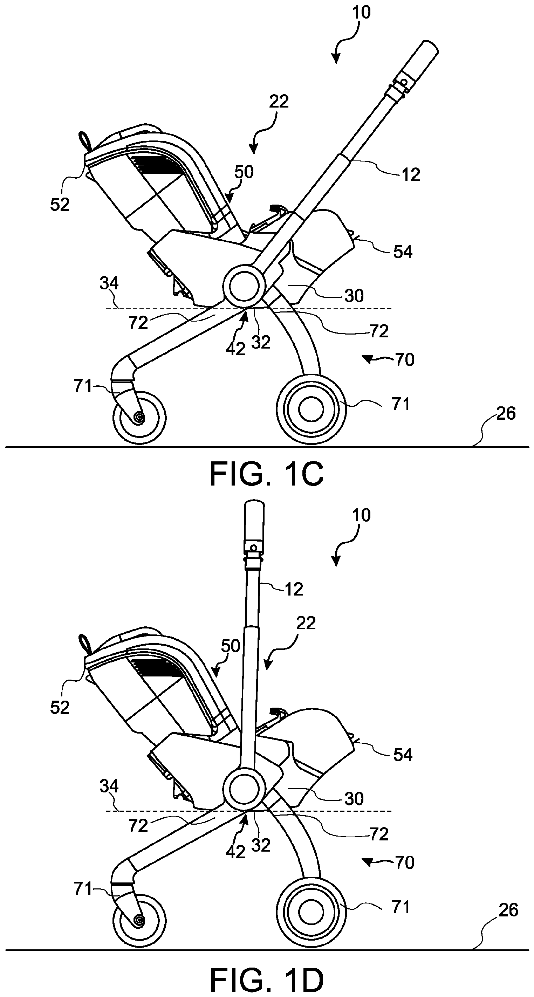

A convertible baby safety car seat assembly, according to one example of the presently disclosed subject matter can be any seat assembly configured for use in modes of operation as illustrated in Figs. 1A-1D. These modes of operation are a car seat mounting mode (or generally a mode in which the seat can be placed on a surface) shown in Fig. 1A, which hereinafter will be referred to as a storage mode 20; an extended stroller mode shown in Fig. 1B, which hereinafter will be referred to as an extended operational mode 24; an upright stroller mode shown in Fig. 1C and a rollable carrier mode shown in Fig. 1D, which both hereinafter will be referred to as an upright operational mode 22.

In the present example, the convertible baby safety car seat assembly shown in Figs. 1A to 1D, is designated as 10 and it comprises a lower support 30, an upper seat 50 articulated to and mounted on the lower support 30, legs 70 having distal ends 71 associated with wheels and proximal ends 72 pivotally articulated to the lower support 30, and a handle 12 configured to be pivoted between a plurality of positions as shown in Figs. 1A to 1D.

The handle can have an adjustable length, allowing the handle to take a number of states in accordance with the mode, in which the safety car seat assembly is to be used.

The handle 12 of the present example can take at least a carrier state (Fig. 1D), in which it is oriented generally vertically (Fig. 1D), a stroller state (Figs. 1B and 1C), in which it extends frontward and can have a length greater than in the carrier state, and a storage state, in which is oriented rearwardly (Fig. 1A). The handle 12 can further take an anti-rebound state in which it has the same orientation as in the stroller state but a shorter length.

In general, the lower support can comprise right and left handle attachment areas at which the handle 12 can be pivotally connected at least indirectly to the lower support. For instance, the handle can be connected directly to the lower support or can be connected via an intermediate element. In any case, the lower support bears at least a part of the weight of the handle as well as at least a part of a force associated with pivoting of the handle and/or carrying of the car seat assembly by the handle, or any other forces (for example, impact forces) associated with the handle.

Similarly, in general, the lower support can comprise right and left leg attachment areas at which the legs 70 can be pivotally connected at least indirectly to the lower support. For instance, the legs can be connected directly to the lower support or can be connected via an intermediate element. In any case, the lower support bears at least a part of the weight of the legs as well as at least a part of a force associated with pivoting of the legs.

In the present example, the lower support 30 comprises a seat lowermost area 32 configured to contact a supporting surface 26, which can be e.g. a vehicle seat or a base securely mounted thereon or the ground, onto which the seat assembly is configured to be used as a safety seat. The supporting surface 26 is suitable for mounting/positioning the seat assembly 10 thereon when in the storage mode 20. The seat lowermost area 32 defines an imaginary horizontal base plane 34 and further comprises two leg attachment areas 42 to which proximal ends 72 of the legs are pivotally articulated between the following two states:
(a) a storage state (Fig. 1A), in which the distal ends of the legs are positioned on or above the horizontal base plane 34 such that the seat lowermost area 32 of the seat assembly 10 can contact the supporting surface 26, to which the seat assembly is to be mounted or on which it is to be positioned; and
(b) an operational state (Figs. 1B, 1C and 1D), in which the seat assembly can be rolled by the wheels, which are positioned below the horizontal base plane 34, on the supporting surface 26.

The upper seat 50 comprises a rear backrest portion 52 and a front feet portion 54 which is spaced to a smaller distance from the horizontal base plane 34 than the backrest portion 52. The backrest portion 52 is configured to support the head and back of an infant seated on the seat assembly 10 and to better support the head it can be provided with a headrest assembly 53 configured to be adjusted between a default position and a lifted position, as known in the art.

The upper seat 50 is manipulable between the following two states:
(a) an upright state (Figs. 1A, 1C and 1D) enabling a seated position for an infant secured to the upper seat 50, in which the backrest portion 52 has a first orientation and forms a first angle α with the feet portion 54; and
(b) an extended state (Fig. 1B) enabling a lie-flat position for an infant secured to the upper seat 50, in which the backrest portion 52 has a second orientation closer to a horizontal orientation than the first orientation and forms with the feet portion 54 a second angle β greater than the first angle α.

Specifically, the first angle α can be about 90-130 degrees and the second angle β can be about 140-170 degrees.

In general, the basic structure of the lower support can comprise at least one articulation portion, to which at least a part of the upper seat is configured to be articulated so as to allow the change of its state between the upright and extended states.

The lower support can comprise rear and front articulation portions (interchangeably referred to herein as rear and front portions) to which the backrest and feet portions of the upper seat can be articulated, respectively. The articulation portion/s can be configured to provide the same or different kinds of articulation to the associated portion/s of the upper seat, i.e., they both can be configured to provide a pivotal or linear articulation or rather one of them can provide pivotal and the other one - linear articulation of the associated portion of the upper seat. More particularly, the lower support can comprise a rear articulation portion at the rear of the lower support, to which the backrest portion is configured to be pivotally articulated, and a front articulation portion at the front of the lower support, to which the feet portion of the upper seat is configured to be slidably articulated.

The lower support can be in the form of an asymmetric bowl comprising a bottom, a high rear wall and a low front wall spaced from each other along a longitudinal axis of the lower portion, and two side walls extending therebetween generally parallel to this axis as best seen in a side view of each side wall taken perpendicular to its inner surface. The rear and front walls can generally extend away from each other, as seen in the side view of the lower support, so that a distance between them along the longitudinal axis increases in the direction away from the bottom of the lower support.

The rear articulation portion can be located at rear areas of the side walls of the lower support, e.g., closer to the side walls' top than to the bottom of the lower support, and the front articulation portion can be located at the front wall of the lower support. The backrest portion of the upper seat can thus be configured to be pivotally articulated to the rear articulation portion about an axis perpendicular to a longitudinal direction of the lower support, and the feet portion of the upper seat can be configured to be slidably articulated to the front articulation portion along the longitudinal direction.

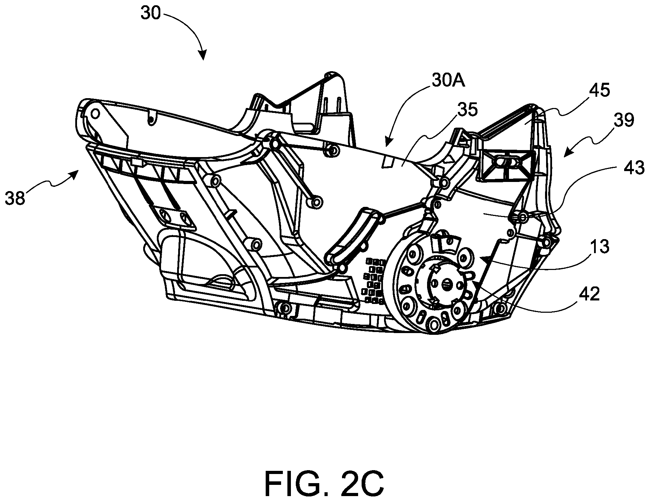

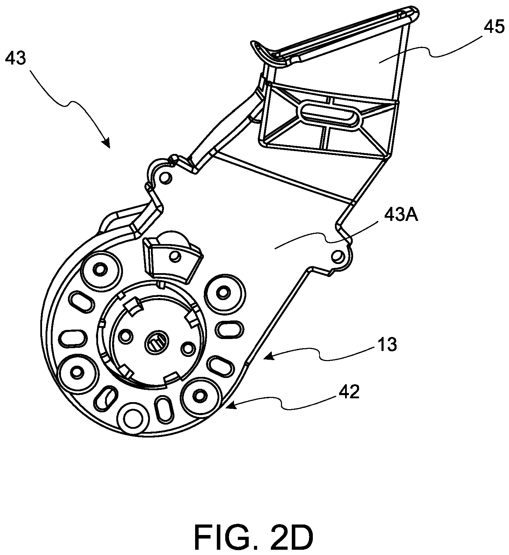

In the present example, the lower support 30 shown in detail in Fig. 2C, comprises two side walls 35, a rear portion 38, to which the backrest portion 52 is configured to be pivotally articulated, and a front portion 39, to which the feet portion 54 of the upper seat 50 is configured to be slidably articulated.

The lower support 30 comprises two leg attachment areas 42 (one of which is shown in Fig. 2C), to which proximal ends 72 of the legs 70 are pivotally articulated between the operational and storage states of the legs 70. In general, the lower support 30 can comprise a leg manipulation mechanism (not shown) configured to lock the legs 70 in either one of their storage state and operational state and to unlock them to enable their manipulation between the states. Different constructions of the leg manipulation mechanism providing the above locking arrangement can be used, including but not limited to any one of those described e.g., in the Applicant's US8469389 and US9505321, and the description of these constructions therefrom is incorporated herein by reference.

Regarding the legs of a seat assembly according to the presently disclosed subject matter, with reference to the legs and leg locking arrangement as described in US9505321 (which description is incorporated herein by reference as indicated above), the legs can be configured to be manipulated by a leg manipulation mechanism comprising at least one leg manipulation actuator positioned at a location available for a user.

The upper seat of a seat assembly according to the presently disclosed subject matter has a construction enabling at least a part thereof to be articulated to the one or more of the articulation portion/s of the lower support as described above, to allow the change of the state of the upper seat between the upright and extended states. More particularly, when the lower support comprises rear and front articulation portions, the backrest and feet portions of the upper seat can have articulable elements respectively configured to be articulated to the articulation portions of the lower support as desired. For example, an articulable element of the backrest portion of the upper seat can be configured to be pivotally articulated to the rear articulation portion of the lower support, and an articulable element of the feet portion of the upper seat can be configured to be slidably articulated to the front articulation portion of the lower support. The backrest portion and the feet portion of the upper seat can also be articulately connected to each other, so that the movement of one of them will induce manipulation to the other one.

In general, the backrest and the feet portions of the upper seat can be directly or indirectly connected to each other. Alternatively, the backrest and the feet portions can be separately connected to lower support without being connected to each other. In case the backrest and the feet portions are connected to each other, they can be articulately connected directly, or indirectly via an intermediate backrest portion, to enable rotation/manipulation of one of the portions while the other portion is being manipulated/rotated. Also, the backrest and the feet portions can be fixedly connected to each other in order to induce manipulation of one portion by manipulating the other portion.

In general, the upper seat can further comprise a seat manipulation mechanism operable to induce the upper seat to change its state between the upright and extended states, as described above with reference to Figs. 1A to 1D. This mechanism can be configured to induce the manipulation of only the backrest portion of the upper seat while maintaining the position of the feet portion unchanged (in order to provide different orientations of the backrest in the upright state of the upper seat), and/or to cause each of the backrest portion and the feet portion to move, or to cause movement of the feet portion which in turn induces the movement of the backrest portion (in both latter cases - to change the state of the upper seat between its upright and extended states). The seat manipulation mechanism can comprise a seat manipulation actuator positioned at a location available to be actuated by a user.

In general, the car seat assembly can comprise at least one reinforced region that provides strength to the lower support. The reinforced region generally comprises a material and/or a structure different than a remaining body of the lower support. The reinforced region can be arranged together with the lower support so as to render the lower support stronger than it would be if it was free of said reinforced region. In some examples, the reinforced region can be unitarily formed (molded or extruded together) with the lower support. In some examples, the reinforced region can be manufactured separately from the lower support, for example, in the form of a reinforced element, and can be integrally connected (for example, by welding) or securely mounted (for example, by mechanical fixation means) thereto. In any case, at least in the operational mode of the car seat assembly, the reinforced region can constitute a part of the lower support, such that the lower support can thus comprise the reinforced region located for example at least at the sidewalls of the lower support. Other parts of the lower support including the rear and front portions, parts of the sidewalls free of the reinforced region, and bottom of the lower support can constitute the remaining body of the lower support.

In general, the reinforced region can constitute an anchoring region which is stronger than the surrounding, remaining body of the lower support, whereby certain components of the seat are attached, directly or indirectly, to the reinforced region. Such components include: a pivotable handle of the seat, whereby the handle attachment area is located at the reinforced region; a car seat belt guiding member which is at least indirectly connected to the reinforced region; and optionally, pivotable legs of the seat assembly, whereby the legs attachment area is located at the reinforced region.

Referring now to the car seat belt guiding member: in some embodiments, the reinforced region comprises a belt guide connection portion, to which the car set belt guiding member is directly attached. In other embodiments, the car seat guiding member is formed as part of the pivotable handle (e.g. as a designated slot or other recess defined along or adjacent the handle), and since the handle is connected to the reinforcing region, the car seat belt guiding member is therefore indirectly attached to the reinforced region. In the latter case, when the car seat belt is passed through the car seat belt guiding member, the car seat belt is led by the guiding member to abut on a top surface of the reinforced region. In both arrangements of the car seat belt guiding member, the reinforced region is designed and located to withstand forces which may be applied by the car seat belt onto the seat assembly, especially under impact.

It is to be understood herein that for the purposes of the present description, the term "stronger" or "strong" with respect to the reinforced region and lower support is to be understood as being capable of supporting the components connected to the reinforced region, such as the handle and pivoting thereof, the car seat belt guiding member, and optionally the legs and pivoting thereof. The reinforced region may be potentially advantageous for bearing forces associated with impact (for example, the type and/or magnitude of forces applied during regulatory impact tests), potentially improving the integrity of the lower portion and thereby of the seat assembly as a whole. Further, by attaching the handle and optionally the legs to the reinforced region, a risk of mechanical failure, e.g. break or detachment, may be reduced or prevented (for example, when lifting the seat via the handle, the reinforced region potentially supports, at least in part, the weight of the seat assembly and infant carried therein).

Moreover, the lower support, strengthened by the reinforced region(s), can improve the stability of the upper seat, for example, when the upper seat is manipulated between its upright and extended states, as described herein above. The strength of the reinforced region can be provided by virtue of material and/or structure. For example, the reinforced region can include a cellular structure, support beams, or other rigidifying structural elements; and/or include or be formed of a material stronger than the rest of the lower portion, for example polyamid; polypropylene or other plastic or thermoplastic materials at a selected grade. In addition to the material and/or structure, attachment of the handle, and in some embodiments, the legs, t to the lower support at the reinforced region (directly or indirectly) can result in a thick material layer at such locations, rendering those locations stronger.

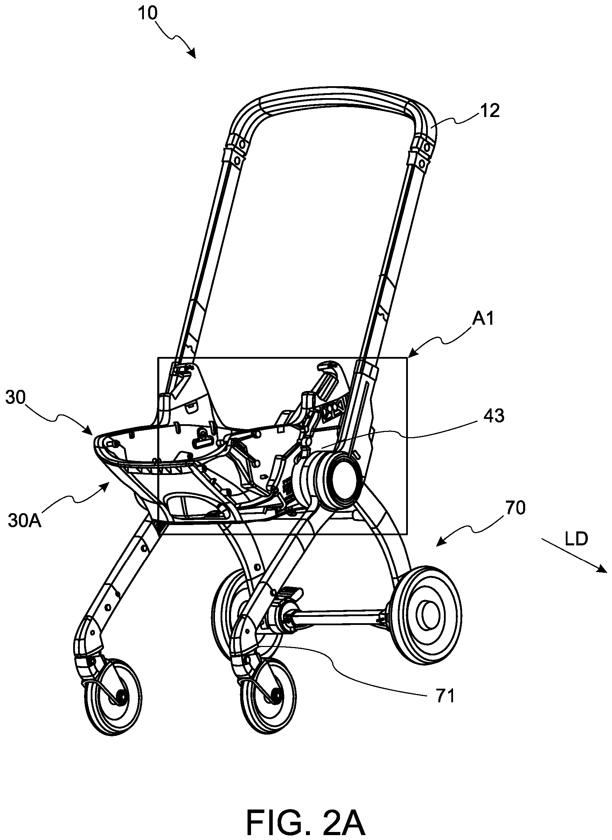

In the present example, the lower support 30 comprises two reinforced regions 43 including a right reinforced region and left reinforced region (only one reinforced region 43 visible in Figs. 2A to 2E). The handle attachment areas 13 include right handle attachment area and left handle attachment area (only one handle attachment area 13 visible in Figs. 2A to 2E), and the leg attachment areas 42 include right leg attachment area and left leg attachment area (only one leg attachment area visible in Figs. 2A to 2E).

In general, the handle attachment areas and/or the leg attachment areas can overlap (when seen in the side view) at least partially with the corresponding reinforced region and/or with each other. For instance, the areas where the legs and the handle are pivotally connected need to be strong enough to support and stabilize the pivoting thereof. The legs can constitute a front pair of legs and a rear pair of legs, and at least one of the front and rear pair of legs can be connected to the seat at the leg attachment area. The leg attachment area can at least partially overlap with the handle attachment area. For example, a lateral axis parallel to a pivot axis of the handle can pass through at least a portion of the handle attachment area and at least a portion of the leg attachment area. This overlapping of the handle attachment area and the leg attachment area provides a thick layer of material at the area.

Although the below description refers to only one of the handle attachment areas, leg attachment areas, and reinforced regions, however it is to be understood herein that the description below relates to the other ones of these elements as well.

In the present example, the handle attachment area 13 and the leg attachment area 42 overlap with each other and are fully located at the reinforced region 43. The reinforced region 43 is formed as a reinforced element 43 securely mounted by fasteners to the sidewalls 35 of the lower support 30, and extends further in a lateral direction LD as compared to the remaining body 30A of the lower support 30, thereby constituting an outermost region of the lower support and rendering the portion of the lower support 30 with the reinforced region 43 thicker as compared to the remaining body 30A. In some examples, the reinforced region may not extend further in the lateral direction LD as compared to the remaining body 30A. In some examples, an outer surface 43A of the reinforced region 43 can be flush with an outer surface of the sidewall 35 of the lower support 30.

In some examples, the reinforced region 43 can be made of a same material as that of the remaining body 30A of the lower support 30, and can include an additional reinforcing material providing strength thereto. It is to be understood herein that in some examples, the remaining body of the lower support can also include same or different reinforcing material, however in such examples, the term 'additional reinforcing material' is intended to include within its scope the fact that the reinforced region includes more (by weight ratio) percentage of the reinforcing material than in the remaining body. In some examples, the reinforced region 43 can be made of a same material as that of the remaining body 30A of the lower support 30, but in a different physical form or structure suitable to provide a higher rigidity and/or bulk density. In some examples, the reinforced region 43 can be made of a different material than that of the remaining body 30A, whereas the different material can be wholly or partially a reinforcing material being stronger than that of the remaining body 30A. The reinforcing material that can be used to strengthen the reinforced region 43 can include fibers, and more particularly, glass fibers. In some examples, the fibers can include carbon fibers.

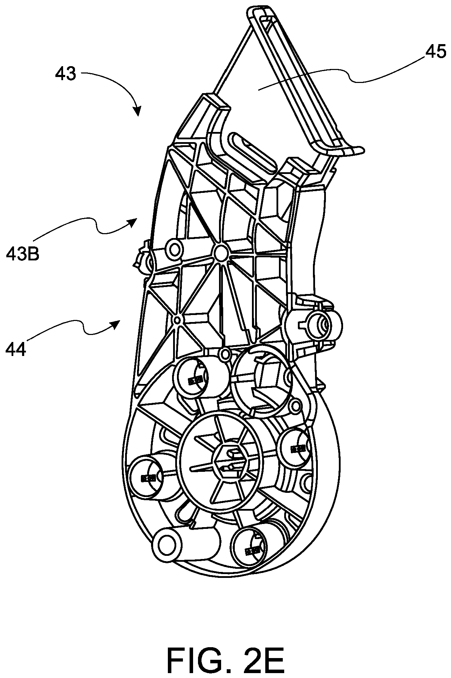

In general, the reinforced regions can have a structure that provides strength thereto. For example, at least one of the inner and outer sides or surfaces of the reinforced regions can have a cellular structure having ribs configured to provide an enhanced strength to the reinforced structure. It is to be understood herein that the strength- providing structure can be any structure formed on any one or both of the inner and outer side of the reinforced region to render the reinforced region stronger that it would be without that structure. In the present example, the inner side 43B (Fig. 2E) of the reinforced region 43 has a cellular structure 44, by virtue of which the reinforced region 43 renders the lower support 30 stronger than it would be if it was free of the reinforced region 43.

In general, the reinforced region 43 can extend upwards from the handle attachment area and the leg attachment area so as to support a seat belt of the car when the car seat assembly is positioned in the car and the seat belt is in use. Thus, the reinforced region 43 can bear at least a part of the forces subjected to the seat belt by the infant seated in the car seat assembly. Each of the reinforced regions 43 can have a corresponding right and left belt guide connection portion to which a car seat-belt guiding member can be connected. In some examples, the car seat-belt guiding member can be fixedly connected at the belt guide connection portion. In some examples, the reinforced region can be formed as a single unit which includes the belt guide connection portion and corresponding car seat-belt guiding member. In some examples, the car seat-belt guiding member can be detachably connected at the belt guide connection portion. In some examples, there may not be a specific belt guide connection portion and/or a car seat-belt guiding member, and any portion of the reinforced region can support the car seat belt. In such case, the car seat belt may be guided to abut against the reinforced region, e.g. be stretched against a top portion of the reinforced region.

In some examples, at least one position of the handle (such as anti-rebound position) can enable the seat belt of the car to abut on the handle, adjacent and laterally to the car seat-belt guiding member (when the car seat belt guiding member directly extends from the reinforced region). In other examples, when the car seat belt guiding member is configured as part of the handle, the car seat belt may be passed through the guiding member and guided to be stretched on top of the reinforced region, adjacent the guiding member. In both arrangements, there car seat belt may be supported by both the reinforced region and the handle.

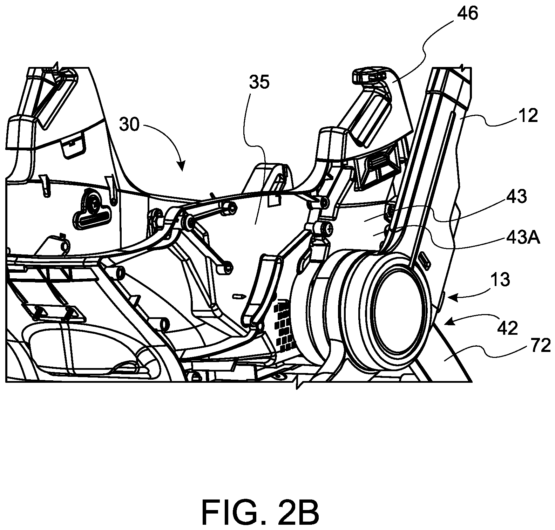

In the present example, the reinforced region 43 has the belt guide connection portion 45 to which the car seat-belt guiding member 46 (Fig. 2B) is connected. The seat belt (not shown) of the car can pass at least partially engage the car seat-belt guiding member 46. Optionally, the car seat belt abuts the handle 12 adjacent and laterally with respect to the car seat-belt guiding member 46.

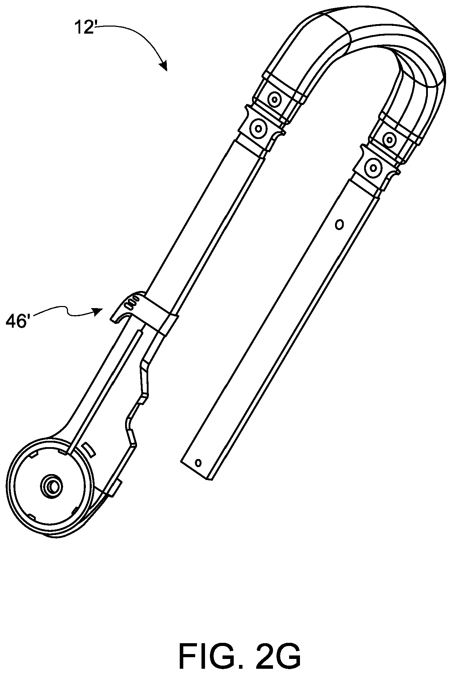

In some examples, the car seat belt can be passed through a seat belt guiding member formed on the handle. For example, as illustrated in an exemplary handle 12' shown in Fig. 2G, the handle 12' includes a seat belt guiding member 46', which is configured to guide the seat belt of the car. In this example as well, the force associated with the seat belt is indirectly borne by the reinforced region via the handle and the handle attachment area.

In general, the baby safety car seat assembly can further comprise at least one side protection module positioned so as to at least partially overlap corresponding one of the reinforced regions in a lateral direction. The side protection module can be configured to provide the seat assembly with side impact protection. More particularly, the side protection module can be configured for absorbing at least a part of the energy of an impact thereupon. As an example, at least when the seat assembly is in its storage or car seat mounting mode and is positioned within a car adjacent a side door of the car, in the scenario of an impact from the door of the car on the assembly, the side protection module mounted on the side of assembly facing the car door can absorb at least a part of the energy of the impact, thereby preventing the infant seated in the assembly against injury.

The side protection module can be selectively mountable to the handle at the exterior-facing area of the handle, such the side protection module extends in a lateral direction of the seat to an extent greater than the handle. The connection of the side protection module and the handle can be by any suitable connection arrangement including mechanical, electrical, or magnetic connections allowing the side protection module to be pivotable together with the handle when connected thereto, while allowing for selective attachment and detachment of the side protection module. The side protection module can have its orientation fixed to the handle, and thus can be pivotable together with the handle.

In general, the side protection module can have an elongated shape extending along a longitudinal axis, such that the side protection module can have a longitudinal dimension extending along the longitudinal axis, which is longer than a lateral dimension extending transverse the longitudinal axis. The elongated shape can be rectangular, polygonal, triangular, oval, elliptical, egg-shaped, teardrop shape, or the like.

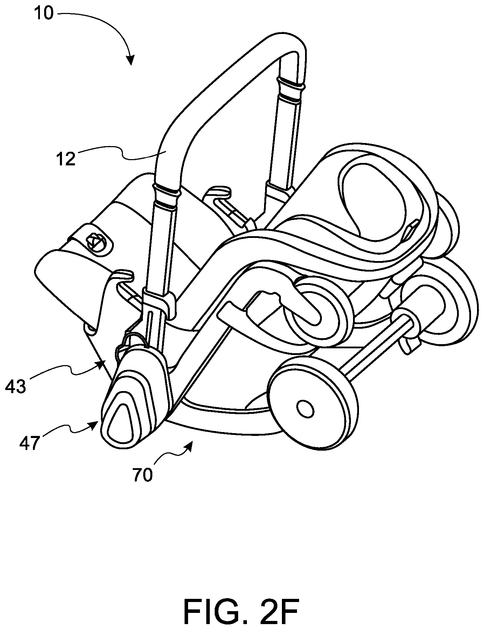

In the present example, the side protection module 47 (Fig. 2F) is shown as being mounted to the handle 12. Although only one side protection module 47 has been shown, it is to be understood herein that the car seat assembly can include two side protection modules, one on each side of the seat, and the description of one side protection module 47 can apply to both side protection modules. The side protection module 47 is mounted to overlap in the lateral direction the reinforced region 43 (not visible in Fig .2F). Thus, the forces of the impact on the side protection module 47 are at least partially borne by the reinforced region 43.

It is to be understood herein that the above description of the reinforced region can apply to any seat assembly being a safety car seat or a stroller having a lower support with an upper seat articulably or fixedly mounted thereto, whereas the upper seat may or may not be manipulable between different states. The seat assembly may have handle that may or may not be pivotally connected thereto. The seat assembly may or may not have legs that can be pivotally or fixedly connected thereto. The lower support can be formed as a unitarily formed structure with the reinforced region or can be formed in separate (more than one) parts assembled together. It is to be further understood herein that the above description of the reinforced region can apply to any car seat assembly, including but not limited to any one of those described e.g., in the Applicant's US8469389 and US9505321.

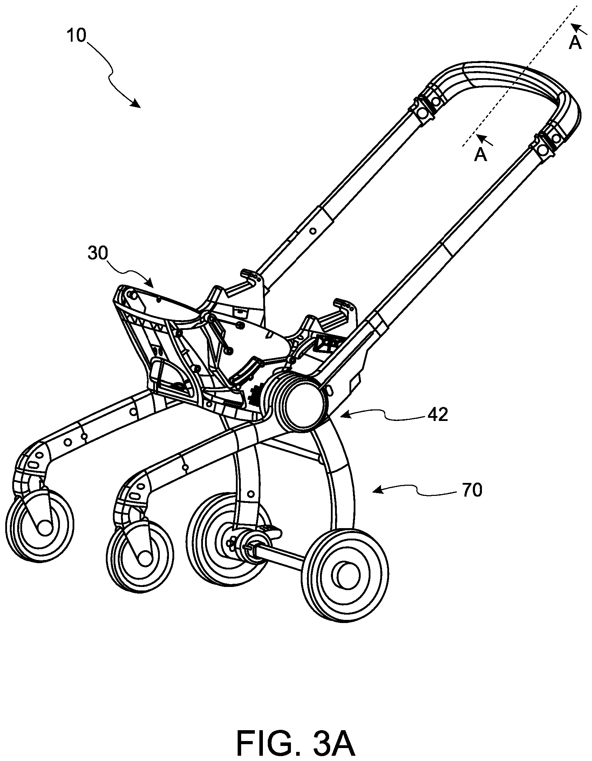

The convertible baby safety car seat assembly according to the presently disclosed subject matter can comprise a leg manipulation damping mechanism for damping and smoothening the pivoting of at one of the legs while being manipulated from the storage state to the operational state, according to the example illustrated in Figs. 3A to 3F. For instance, the pivoting of the legs between the operational state and the storage state has been described herein above with respect to Figs. 1A to 1D. For instance, the legs are pivotable rearwardly towards the backrest portion 52 of the seat for being manipulated from the operational state to the storage state such that in the storage state said distal ends of the legs are positioned closer to the backrest portion 52 than the feet portion 54 of the seat. To manipulate the legs from the storage state to the operational state, the legs are pivoted frontward and downwardly from the position of the legs in the storage state. The car seat assembly can be held by a user above the supporting surface and the legs pivot at least partially under the influence of gravity.

Pivoting of the legs which takes place fully under the influence of gravity, with the legs pivoting freely, may be associated with noise (such as when the legs contact the supporting surface); wear and tear; inconvenience to the user. Use of a leg manipulation damping mechanism for example as described herein may prevent or reduce the above issues, for example due to the legs being pivoted in a smoother, optionally slower manner, and reaching a softer contact with the supporting surface. The leg manipulation damping mechanism can be effective to modify the energy, speed, acceleration, or combinations thereof of the movement of the legs under the influence of gravity to render the pivoting smooth and slow, and thus damped.

In some examples, the leg manipulation damping mechanism can damp the full extent of the pivoting movement manipulating the legs from the storage state to the operational state. In some examples, the leg manipulation damping mechanism can damp a part of the pivoting movement from the storage state to the operational state. In some examples, the leg manipulation damping mechanism can intermittently damp parts of the pivoting movement from the storage state to the operational state.

In general, the leg manipulation damping mechanism can comprise a toothed arrangement, such as a gear arrangement, a rack and pinion arrangement, a gear train or any suitable toothed structure to damp the pivoting movement of the legs. Other mechanical damping arrangements are also contemplated, e.g. spring based damping, linear damping or others.

The leg manipulation damping mechanism can comprise a first part associated with one of the legs and the leg attachment area and a second part associated with the other one of the leg attachment area and the leg, and operatively engaging the first part. The leg manipulation damping mechanism has been described below with respect to one leg for the sake of conciseness, and it is to be understood herein that each of the legs can include a respective leg manipulation damping mechanism, or each pair (such a left pair and a right pair) of legs can include a respective leg manipulation damping mechanism in which the two legs of each such pair can be locked to each to pivot together at least for a part of the pivoting movement, or all the legs can include one leg manipulation damping mechanism whereas all the legs can be locked together to pivot together at least for a part of the pivoting movement. The description of one leg manipulation damping mechanism can apply to all the leg manipulation damping mechanisms that the car seat assembly may have, according to various examples.

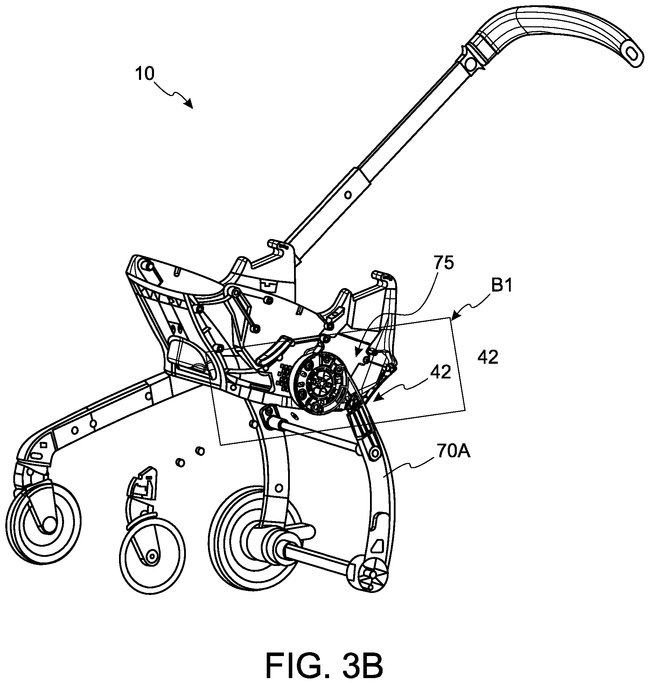

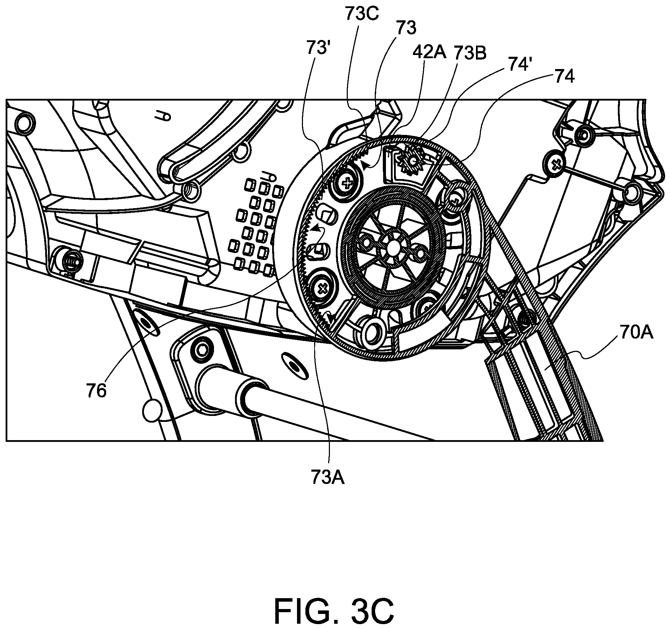

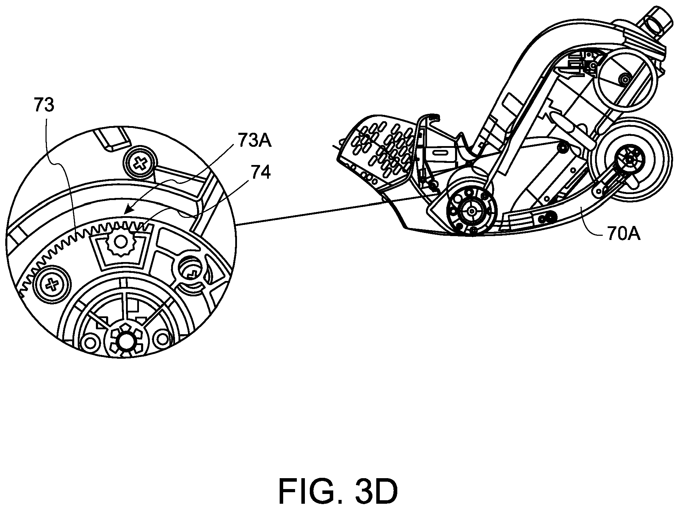

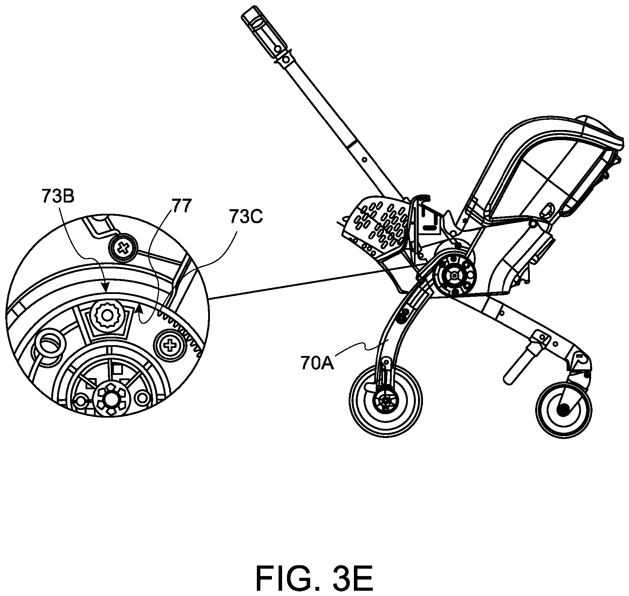

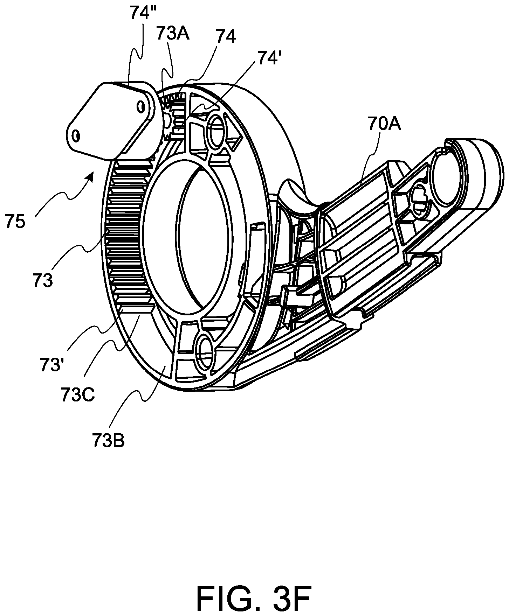

In the present example, the leg manipulation damping mechanism, generally designated as 75, comprises a first part 73 formed on an inner surface of the front leg 70A in the form of a curved rack 73 and a second part 74 mounted on the leg attachment area 42 in the form of a pinion 74. When the leg 70A is in its storage state (Figs. 3D and 3F), the pinion 74 engages a first position 73A on the inner surface of the front leg, which is located on the rack 73, and when the leg 70A is manipulated towards its operational state, the pinion 74 rotates about its axis while the teeth 74' of the pinion 74 engage the teeth 73' of the rack 73. When the leg 70A reaches its operational state (Figs. 3A, 3B, 3C, and 3E), the pinion 74 engages a second position 73B on the inner surface of the front leg, which is distant from the rack 73. It is to be noted herein that the inner surface comprises an intermediate position at 73C where the teeth 73' of the rack 73 end. Thus, the toothed portion 76 of the inner surface (constituting the rack) constitutes a damping portion 76 extending between the first position 73A and the intermediate position 73C, and the portion of the inner surface without teeth 73A constitutes a free portion 77 extending between the intermediate position 73C and the second position 73B. The pivoting movement of the leg 70A from its storage state to its operational state is damped only until the pinion 74 engages the damping portion 76, by virtue of the teeth 73' being engaged with the teeth 74', and the leg 70A pivots freely under the influence of gravity once the pinion 74 arrives at the end of the teeth 73', i.e., the intermediate position 73C. Accordingly, the part of the pivoting movement of the leg 70A where the pinion 74 engages the damping portion 76 constitutes a damped part of the pivoting movement, and the part of the pivoting movement of the leg 70A where the pinion 74 engages the free portion 77 constitutes an undamped part of the pivoting movement.

In some examples, the inner surface can have a toothed portion extending from the first position 73A to the second position 73B. In some examples, the inner surface can comprise discrete racked portions with teeth and smooth portions therebetween, i.e., alternate discrete and smooth portions (or damping and free portions).

When the teeth 74' of the pinion 74 engage the teeth 73' of the rack 73, the pivoting of the leg 70A is damped and controlled such that the leg does not free fall under the influence of gravity. For instance, the engagement between the teeth of the rack and pinion at least partially restrict the pivoting movement of the leg and therefore and the speed, acceleration, kinetic energy, etc. are controlled. The extent of damping can be manipulated by choosing, for example, the size of teeth on the pinion 74 and/or the rack 73, the interval between the teeth, the diameter of the pin, and/or others. In some embodiments, as shown, the leg attachment area 42 comprises a pocket-shaped housing 42A in which the pinion 74 is positioned. The pinion 74 is mounted via an axle arrangement 74" (Fig. 3F) through a hole in the leg attachment area 42 by fasteners. In order to change the extent of damping, such as during manufacturing or construction, the pinion can be replaced by another pinion, for example with a different teeth arrangement and/or diameter.

It is to be understood herein that although only one leg manipulation damping mechanism has been shown and described herein, the car seat assembly can include a left leg manipulation damping mechanism associated with a left pair of legs including a left front and left front leg, and a right leg manipulation damping mechanism associated with the right pair of legs including the right front and right rear leg, the description of the leg manipulation damping mechanism provided above can apply to both of the right and left leg manipulation damping mechanisms.

It is to be understood herein that the above description of the leg manipulation damping mechanism can apply to any seat assembly being a safety car seat or a stroller having legs manipulable from a storage state to an operational state under the influence of gravity. It is to be further understood herein that the above description of leg manipulation damping mechanism can apply to any car seat assembly having legs manipulable from a storage state to an operational state under the influence of gravity, including but not limited to any one of those described e.g., in the Applicant's US8469389 and US9505321.

In some examples, the leg manipulation damping mechanism can be operable only when the legs are moved from the storage state to the operational state. When the legs are folded back into the storage state, it is preferable to reduce any interference or resistance to the pivoting motion, to facilitate returning of the legs to the storage state. Therefore, in some embodiments, the damping mechanism can be configured for one-way damping only. In the example of the rack and pinion mechanism, the pinion can be configured to rotate only in one direction (either clockwise or counterclockwise), and therefore the relative movement of the pinion on the rack may occur only when transferring the legs from the storage state to the operational state, and not vice versa.

In general, the car seat assembly according to an example can include a locking mechanism operable to lock the left rear leg with respect to the left front leg, and/or the right rear leg with respect to the right front leg respectively, causing the legs of each of these pairs to move together during at least the damped part of the pivoting movement. One of the front and rear legs of each pair can reach its corresponding operational state prior to the other one of the front and rear legs of each pair reaching its corresponding operational state. The leg that reaches its operational state first has been referred to herein as first leg and the other one leg of the same pair has been referred to herein as the second leg. In some examples, the first leg can be the leg that is positioned under the backrest portion of the seat in its operational state, so as to reach its operational state first and support the head of the infant seated in the seat. In some examples, the first leg can be the front leg. In some examples, the first leg can be the rear leg.

In some examples, the first leg can be the one with the leg manipulation damping mechanism. The locking mechanism can be operable to unlock the pair of legs from each other after the completion of the damped part of the pivoting movement. In some examples, the locking mechanism can be operable to unlock the pair of legs from each other after the first leg is in its operational state. In some examples, the locking mechanism can be operable to lock the first leg of each pair in its operational state, and the assembly can further comprise an actuating arrangement operable to move the second leg of the same pair away from the first leg towards the operational state of the second leg, when the legs are unlocked from each other.

In general, the locking mechanism can be configured to perform one or more of:
- locking the legs of each pair to each other so that they can rotate together until a first one of the legs of each pair reaches its operational position,
- locking the first leg in its operational position, while releasing the second leg from its locking to the first leg, thereby allowing the rotation of the second leg relative to the first leg towards the operational position of the second leg, and
- locking the second leg in its operational position.

The seat assembly can further comprise an actuating arrangement associated with the locking mechanism, configured to apply to the second leg a pushing or pulling force to cause it to rotate towards its operational state when released from its locking to the first leg.

Although the locking mechanism and the actuating arrangement have been described herein with respect to one pair of the front and rear legs, it is to be understood herein that the description of the locking mechanism and the actuating arrangement can apply to the locking mechanism and the actuating arrangement of the other pair of legs as well.

In some embodiments, transferring the legs from the storage state to the operational state can be carried out in two stages. During a first stage the front and rear legs can be configured to move together between their storage position and the position, in which the first leg takes its operational state and the second leg takes its intermediate state. This first-stage movement is performed in the described example at least partially under the influence of gravity, while being damped by the damping mechanism. During this movement, the first and second legs are locked to each other by the locking mechanism 100 so that a fixed angle is maintained between these legs. It should be indicated that the movement of the legs as described above may also be facilitated by a suitable actuating mechanism.

When the first leg, which in the present example has been depicted to be the rear leg 70B, has reached its operational position, the locking mechanism 100 releases the front leg 70A, allowing thereby the front leg 70A to continue its movement from its intermediate state to its operational state.

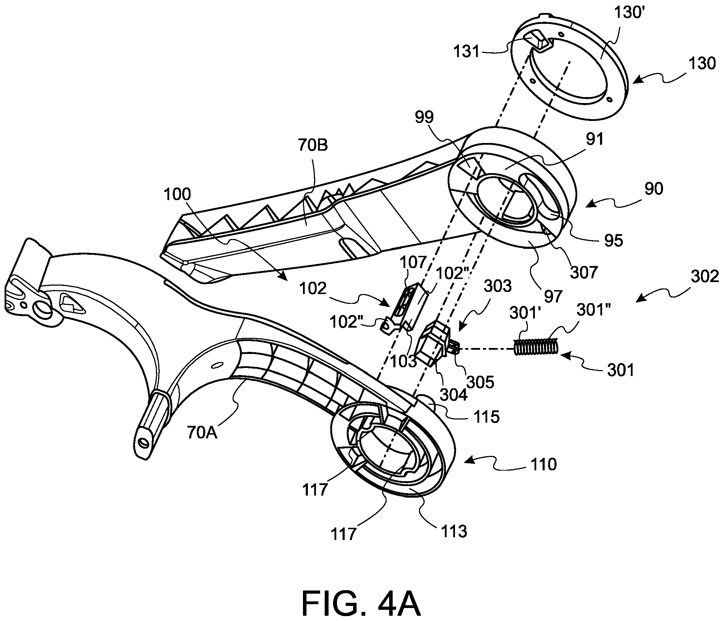

Reference is now made to Figs. 4A to 4C, showing the front and rear legs 70A and 70B, of one pair of legs, together with a cover element 130 mounted to the seat, the locking mechanism 100 and the actuating arrangement 302, and these mechanisms and their operation will now be described in detail. It should, however, be explained in this connection, that the above figures do not show, and the description below does not include, the manner in which the legs 70A and 70B are held at the seat. This manner can be any suitable one, including the one disclosed in US8801028B2, which corresponding figures and description are incorporated herein by reference. It is further noted that a leg manipulation damping mechanism for example as described herein is not shown in FIGs. 4A-C, but can be similarly implemented in the shown parts.

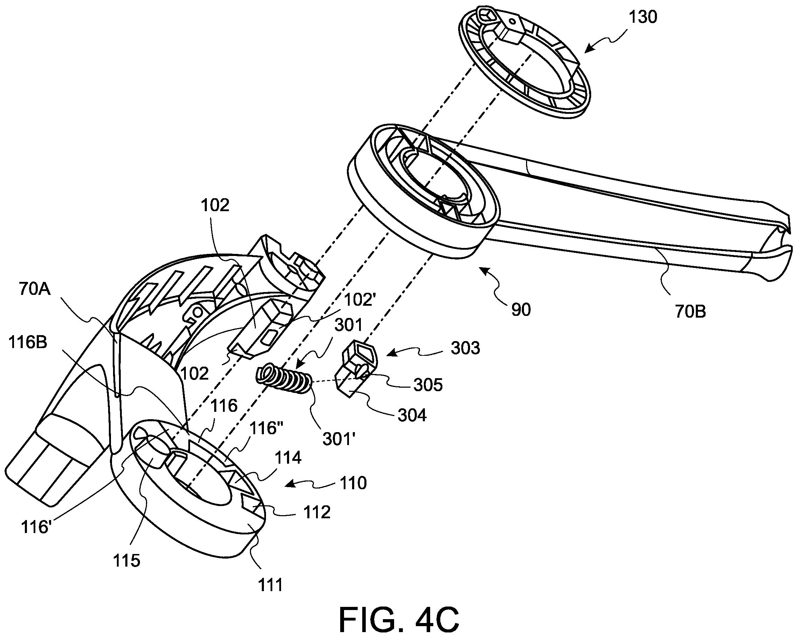

With reference to Figs. 4A to 4C, the rear leg 70B comprises a proximal disc-like section 90, and the front leg 70A comprises a proximal disc-like section 110, which sections are mounted by means on their central openings (not designated) in the same manner as those of the seat of US8801028B2, which corresponding description and drawings are incorporated herein by reference. The sections 90 and 110, together with a cover element 130 (Figs. 4A and 4C), accommodate the locking mechanism 100 and the actuating arrangement 302 (also referred to herein as actuating mechanism 302).

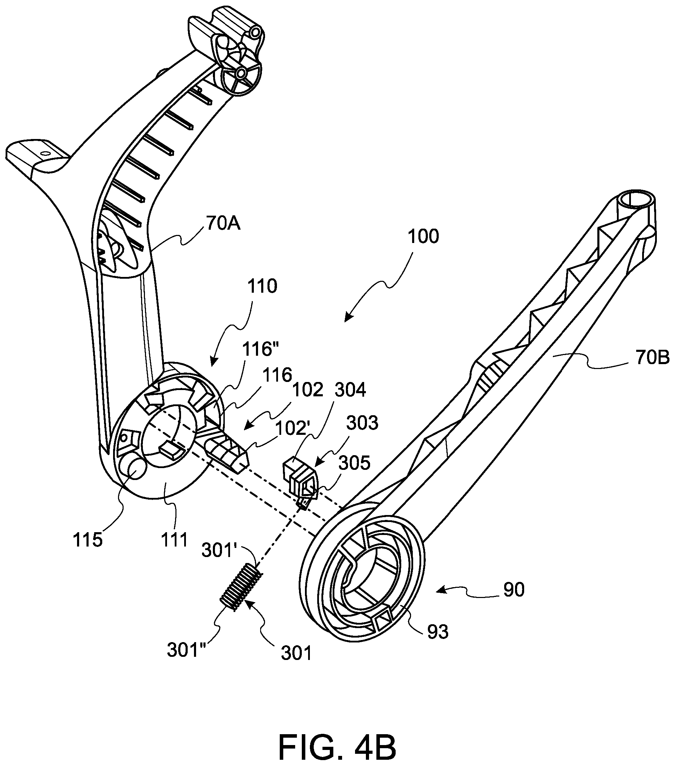

The section 90 has an inner face 91 (Fig. 4A) and an outer face 93 (Fig. 4B). The inner face 91 is formed with a first arched recess 95, a second arched recess 97 and a through opening 99 extending between the inner face 91 and the outer face 93.

The section 110 has an inner face 111 (Figs. 4B and 4C) and an outer face 113 (Fig. 54A). The inner face 111 is formed with an inwardly protruding pin 115, two small recesses 112 and 114 and one long recess 116 (all best seen in Fig. 4C). The outer face 113 of the section 110 comprises cam-like protuberances 117 (Fig. 4A).

The pin 115 together with the first arched recess 95, and the cam-like protuberances 117 act similarly to the corresponding elements of US8801028B2, which description is incorporated herein by reference.

The locking mechanism 100 is formed by a pin 102, the opening 99 of the section 90, and the long recess 116 of the section 110, along which the pin 102 is configured to slide, and a recess 131 in an inner surface 130' of the cover element 130.

With reference also to Figs. 4A to 4C, the pin 102 has a wide body section 102' passing through the opening 99 so that a part thereof having a narrow pin body section 102" protruding from an end 103 of the wide body section (Figs. 4A and 4C), projects from the opening 99 towards the support leg 37 and another part thereof with its end 107 protrudes towards the cover element 130. The recess 116 comprises a sloped locking portion 116' (Fig. 4C) configured to receive therein the end 103 of the wide body section 102' of the pin, with its narrow body section 102", and a releasing portion 116" configured to freely receive therein only the narrow section 102" of the pin with a possibility of its sliding along the releasing portion 116" (Fig. 4C), between its first end 116a disposed adjacent the locking portion 116' and its second end 116b (Fig. 4C) remote from the locking portion 116', thereby allowing the pin 102 to take a number of states as follows:
- a first, pin's locking state, in which the end 103 of the pin with its narrow section 102" is received within the locking portion 116' of the recess 116, and the end 107 of the pin abuts the inner surface 130' of the cover element 130 at its area other than the recess 131, thereby locking the two legs to each other; this state is associated with the respective storage states of the legs;
- a second, pin's movement state, in which the narrow section 102" of the pin is slidingly received within the releasing portion 116" of the recess 116, enabling its movement between the two ends 116a and 116b of the releasing portion 116", and the end 107 of the pin is received within the recess 131 of the cover element 130, releasing the front leg 70A of being locked to the rear leg 70B; this state is associated with the movement of the front leg 70A relative the rear leg 70B between the intermediate state of the front leg 70A and its operational state;
- a third, pin's abutment state, in which the narrow body section 102" of the pin abuts the end 116b of the recess 116, with the end 107 of the pin still abutting the inner surface 130' of the cover element; this state is associated with the operational position of the front leg 70A.

In other words, when the end 103 of the pin wide body section 102' together with the pin narrow body section 102" is received within the sloped locking portion 116' of the recess 116, the sections 90 and 110 are locked to each other and maintained at a fixed angle with respect to each other. As the first leg moves from its storage state to its operational state, the pin 102 slides along the sloped locking portion 116', while keeping the sections 90 and 110 attached to each other. When the first leg reaches its operational state, the pin 102 is released from the sloped locking portion 116', releasing thereby the section 110 of the second leg 70A from the section 90 of the first leg 70B, and continues to slide along the releasing portion 116", so as to reach the third pin state. When the pin 102 is released from the sloped locking portion 116' and its narrow body portion 102" moves along the releasing portion 116" of the recess 116, its end 107 abutting the inner surface 130' of the cover section 130 (shown only in Figs. 4A and 4C), moves along this surface until its entry into the recess 131 therein.

The actuating mechanism 302 is formed by a spring 301, a spring loaded pin 303, with a spring seat 305 to which a first end 301' of the spring 301 is attached, the arched recess 97 of the section 90 (Fig. 4A), which accommodates the pin 303 and the spring 301, and the corresponding recess 112 (Fig. 4C) of the section 110, which receives a mounting portion 304 of the pin 303. The arched recess 97 is formed with a spring seat 307 (Figs. 4A) to which a second end 301" of the spring 301 is attached.

When the front and rear legs are in their operational state, the spring 301 is in its normal state and entirely occupies the entire arched recess 97, while when the legs are in their storage state, the spring 301 is maximally loaded, due to the pressure applied thereto by the pin 303, which slides towards the spring seat 307.

As the second leg is moved into its intermediate state from its operational state, the second leg rotates with respect to the first leg, and the spring 301 is pressed against the pin 301, which slides along the second arched recess 97. When the second leg reaches its intermediate state, the pin 102 is forced to move from the releasing portion 116" to the sloped locking portion 116', locking thereby the legs 70A and 70B to each other. The legs 70A and 70B then move together, at a fixed angle, to their storage states, as the pin 102 moves along the sloped locking portion 116'.

It is to be understood herein that the above description of the locking mechanism and actuating arrangement can apply to any seat assembly being a safety car seat or a stroller having legs manipulable between a storage state and an operational state. It is to be further understood herein that the locking mechanism and actuating arrangement can include some all of the features of the corresponding elements of Applicant's US9505321, which description is incorporated herein by reference.

It is to be further understood herein that the car seat assembly can include another locking mechanism operable to lock the legs in their storage and/or operational states, which can be same as corresponding elements of Applicant's US9505321, which description is incorporated herein by reference.

In general, the upper seat of a seat assembly according to the presently disclosed subject matter can be configured to change of the state of the upper seat between the upright and extended states, as generally described herein above with respect to Figs. 1A to 1D. The upper seat and the lower support can have any of the above-described structures or generally any other structure that allows mounting of the upper seat to the lower support allowing the upper seat to change its state between the upright and extended states.

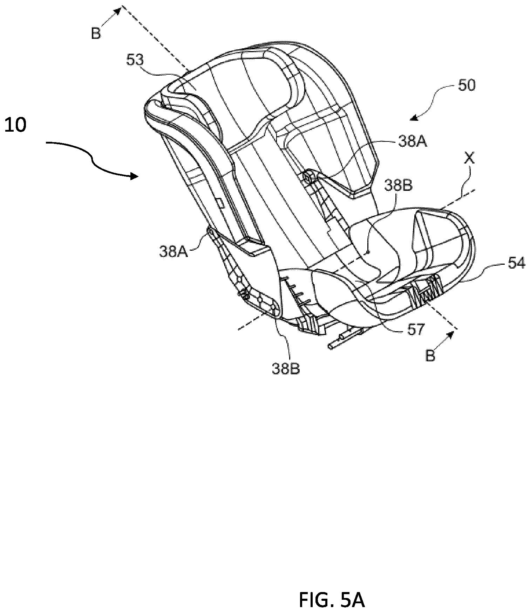

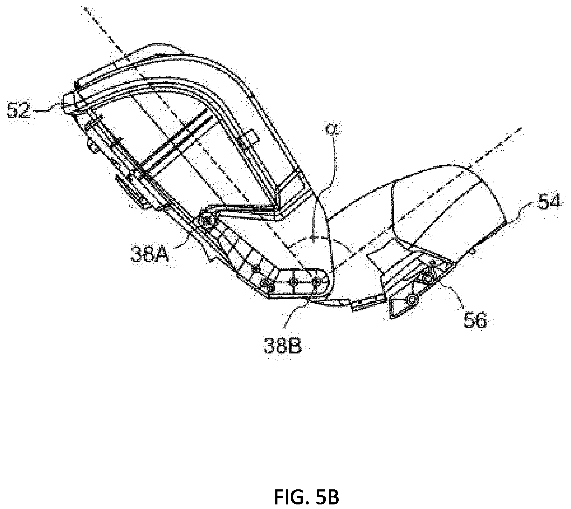

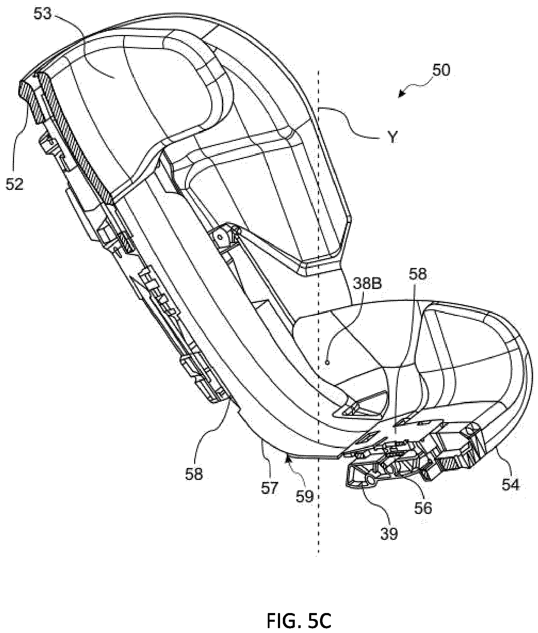

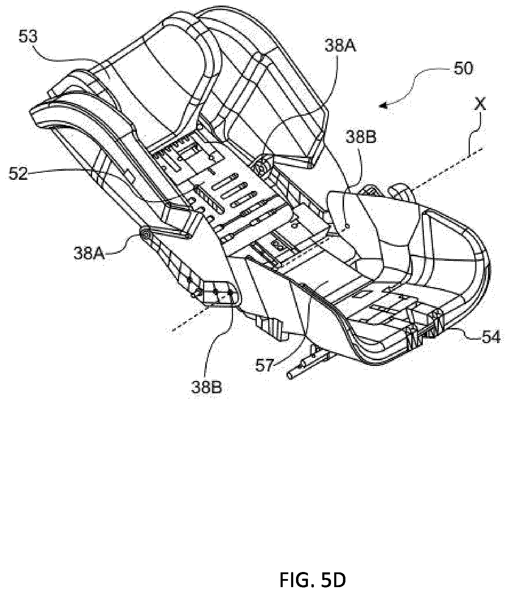

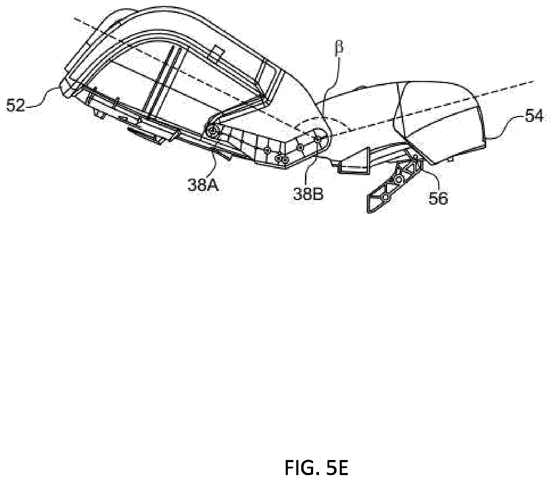

In the present example, as illustrated in Figs. 5A to 5E showing an upper seat without a covering, which can be used together with the lower support shown in any of the examples described herein, the backrest portion of the upper seat is shown in the upright (Figs. 5A, 5B, 5C) and extended (Figs. 5D, 5E) states with the respective first angle α and second angle β referred to above with reference to Figs. 1B, 1C and 1D.

In Figs. 5A to 5E, an articulable element of the backrest portion 52 of the upper seat 50 is constituted by a rear pivot axle 38A unitarily formed or assembled with the backrest portion and having ends freely received in the corresponding recesses of the rear articulation portion of the lower support 30 so as to allow pivoting of the axle with the backrest portion between its close-to-vertical orientation (i.e. upright state) and close-to-horizontal orientation (i.e. extended state). An articulable element of the feet portion 54 of the upper seat 50 is constituted by a sliding bar 56 unitarily formed or assembled with the feet portion 54 and slidably received within the articulation slots 39 of the lower support 30, so as to allow movement of the sliding bar 56 with the feet portion 54 between extreme positions of the sliding bar 56 within the slots 39, corresponding to innermost and outermost positions of the feet portion 54. The close-to-vertical orientation of the backrest portion 52 and innermost position of the feet portion 54, and close-to-horizontal orientation of the backrest portion 52 and outermost position of the feet portion 54 correspond, respectively, to the upright and extended states of the upper seat 50.

In the present example, the upper seat 50 also comprises an intermediate portion 57 fixedly connecting the backrest and the feet portions 52 and 54, to each other. Specifically (as best shown in Fig. 5C), the intermediate portion 57 is constituted as a bottom part of the backrest portion 52, extending forward from a lower edge 58 thereof and being configured to be fixedly connected at a front edge 59 thereof to the feet portion 54. The intermediate portion 57 is concave and configured to receive the bottom of an infant seated on the upper seat 50. The intermediate portion 57 is formed from a flexible material, so as to enable it to be flexed upon manipulation of the upper seat 50 to the extended state, in which the intermediate portion 57 is less concaved then in the upright state.

The backrest portion 52 and the feet portion 54 are also pivotally connected to each other by an articulable element constituted by a front pivot axle (not shown) having ends freely received in lateral intermediate apertures 38B formed in the side walls 35 of the lower support 30. This pivotal connection defines a horizontal axis X interconnecting the lateral intermediate apertures 38B about which the backrest portion 52 and the feet portion 54 pivot.

In general, the car seat assembly according to the presently disclosed subject matter can include a five-point harness having shoulder securing portions for securing the shoulders of the infant seated in the upper seat, hip securing portions for securing hips and/or thighs of the infant, and a crotch securing portion for securing crotch region of the infant. The five-point harness can constitute at least one strap slidably connectable to a central buckle and passing through strap receiving slots formed in the upper seat. The designated slots can be two, right and left backrest strap receiving slots at the backrest portion for receiving therethrough the shoulder securing portions, and two, right and left side strap receiving slots at the feet portion for receiving therethrough the hip securing portions. The strap receiving slots can be located at the periphery of the upper seat or somewhere within the body of the upper seat and define connection paths between a front-facing portion of the upper seat, in which portion the infant is to be seated, and an opposite rear-facing portion of the upper seat, which faces the lower support. The strap(s) pass through the strap receiving slots between the front-facing and rear-facing portions of the upper seat. The portion of the strap(s) that is located at the front-facing portion of the upper seat is generally available to be used for securing the infant in the upper seat, and accordingly this portion of the strap(s) constitutes a securing portion of the strap(s). The securing portion can include the shoulder securing portions, the hip securing portions and the crotch securing portion. The portion of the strap(s) that is located at the rear-facing portion of the upper seat is generally used for fixing the strap(s), for example at an end thereof, to the rear-facing portion of the upper seat or to the lower support, and accordingly this portion of the strap constitutes a fixing portion of the strap(s). The fixing portion is not available to be used for securing the infant.

In general, the strap(s) can have a total strap length that is arranged along a total strap path extending across the front-facing portion and the rear-facing portion. The part of the total strap length that extends in the front-facing portion can correspond to the securing portion of the strap(s) and can constitute an effective length of the securing portion of the strap(s) which is available to be used for securing the infant in the upper seat. The remaining part of the total strap length that extends in the rear-facing portion can correspond to the fixing portion of the strap(s) and can constitute an effective length of the fixing portion of the strap(s) which is unavailable to be used for securing the infant in the upper seat. Accordingly, a change in the effective length of the fixing portion causes a respective change in the effective length of the securing portion, and vice versa. For example, an increase in the effective length of the fixing portion causes a decrease in the effective length of the securing portion, and vice versa.

When the upper seat is in the extended state, and the infant is in a lying down position, a longer securing portion of the strap(s) is required as compared to that required when the upper seat is in the upright state and the infant is in sitting position. Accordingly, the car seat assembly according to the presently disclosed subject matter can generally have a harness adjusting arrangement that can be operable to adjust the effective length of the securing portion of the strap(s) upon manipulation of the upper seat between the upright state and the extended state.

In general, the harness adjusting arrangement can be operable to automatically adjust the effective length of the securing portion and/or the fixing portion upon manipulation of the upper seat between the upright state and the extended state. In some examples, the harness adjusting arrangement can comprise a strap hold and release mechanism that releases an extra segment of the strap upon manipulation of the upper seat between the upright state and the extended state. In some examples, the harness adjusting arrangement can comprise an arrangement to modify the total strap path upon manipulation of the upper seat between the upright state and the extended state, to thereby modify the effective length of the securing portion and/or the fixing portion. For example, at least one portion of the strap(s) can extend over a movable part of the car seat assembly, which part thus constitutes a part of the total strap path. The movable part can be operable to move upon manipulation of the upper seat between the upright state and the extended state, thereby modifying the total strap path, and accordingly the effective length of the securing and fixing portions, with the total strap length being constant. The movable part can be a part of the upper seat or the lower support, or can be another part separate from the upper seat and the lower support, while being configured to move upon manipulation of the upper seat between the upright state and the extended state. Also, the strap can be fixedly connected to the upper seat or to the lower support. In some examples, the fixing and/or securing portion of the strap can extend over a movable part and can be fixed (e.g. at the strap ends) to the upper seat or to the lower support, whereas the movement of the moveable part upon manipulation of the upper seat between the upright state and the extended state can modify the total strap path, thereby modifying the effective length of the fixing portion and the securing portion (with the total strap length remaining constant).

The harness adjusting arrangement can be constituted by one or more parts of the upper seat and/or the lower support constituting the total strap path, which can be modified upon manipulation of the upper seat between the upright state and the extended state. For example, the relative movement between the upper seat and the lower support can cause the total strap path to change from being a longer strap path to a shorter strap path or vice versa. In some examples, the backrest portion can change its position (move) with respect to the lower support, and in some examples, the feet portion can change its position (move) with respect to the lower support. In some examples, both of the backrest portion and the feet portion can change their respective position (move) with respect to the lower support. Accordingly, any or both of the backrest portion and the feet portion can constitute a part of the total strap path, which can be modified upon manipulation of the upper seat between the upright state and the extended state by virtue of the movement of the backrest portion and/or the feet portion with respect to the lower support.

A constant total strap length covering a shorter or longer strap path can adjust the effective length of the securing portion and the fixing portion of the strap(s). In other words, a constant total strap length covering a shorter strap path can result in a longer effective length available to be used for securing the infant in the upper seat, and the same total strap length covering a shorter strap path can result in a shorter effective length available to be used for securing the infant in the upper seat.

It is to be understood herein that the harness adjusting arrangement can have any structure suitable to adjust the adjust the effective length of the securing portion and/or the fixing portion upon manipulation of the upper seat between the upright state and the extended state.

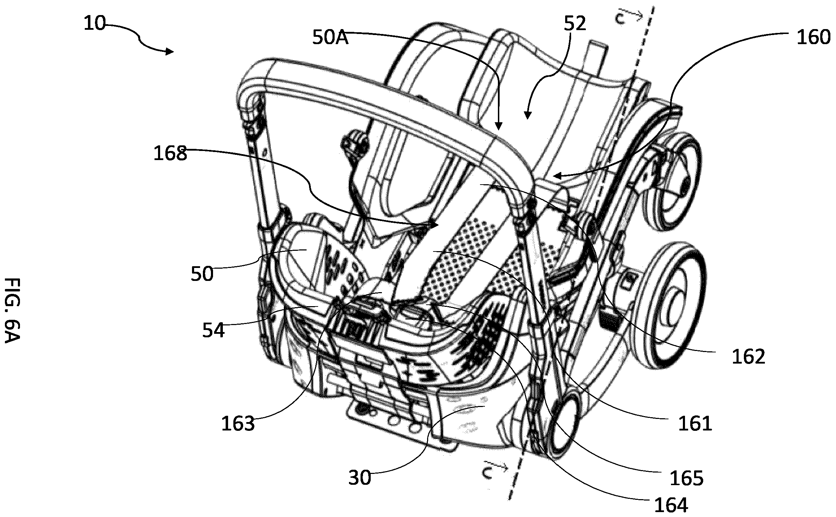

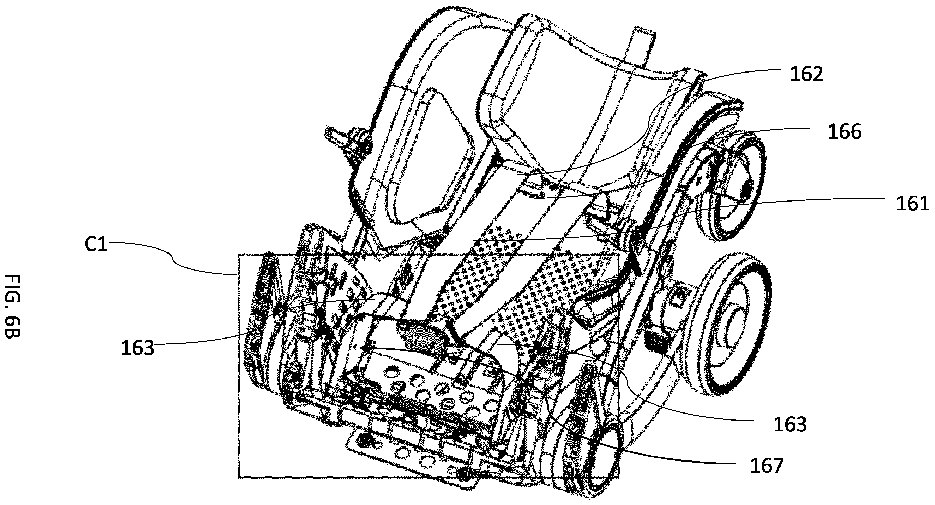

In the present example, as illustrated in Figs. 6A to 6E showing a car seat assembly 10 according to one example of the presently disclosed subject matter, the five-point harness has been generally designated as 160 having the strap 161. It is to be understood herein that the strap can be constituted by a single continuous strap or a plurality of straps forming the harness. The harness 160 comprises two shoulder securing portions 162, two hip securing portions 163, and a crotch securing portion 164, all meeting at a central buckle 165 to which they are connectable. The straps may slidably connect to the buckle or, in some examples, connect to the buckle by a snap-fit attachment or similar. In a specific example, the harness comprises two symmetrically arranged straps, each comprising at least a shoulder securing portion and a hip securing portion.

The upper seat 50 comprises two, left and right, backrest strap receiving slots 166 in the backrest portion 52, and two, left and right, side strap receiving slots 167 in the feet portion 54. The strap receiving slots 166, 167 define connection paths between front-facing portion 50A of the upper seat 50, in which portion the infant is to be seated, and opposite rear-facing portion 50B of the upper seat 50, which portion faces the lower support 30.

The shoulder securing portions 162 slidably pass through the backrest strap receiving slots 166 between the front-facing portion 50A and the rear-facing portion 50B, and the hip securing portions 163 slidably pass through the side strap receiving slots 167 between the front-facing portion 50A and the rear-facing portion 50B. Accordingly, a part of the strap 161 is positioned at the front-facing portion 50A and is available to be used for securing the baby in the upper seat 50 and thus constitutes a securing portion 168 of the strap 161, and a part of the strap 161 is positioned at the rear-facing portion 50B and is unavailable to be used for securing the baby in the upper seat 50 and is used for fixing the strap 161 to the lower support 30 at strap fixation portion 169 thereof, and thus constitutes a fixing portion 170 of the strap 161. The securing portion 168 includes the two shoulder securing portions 162, two hip securing portions 163, and the crotch securing portion 164.

It is to be understood herein that in some examples, the strap fixing portion 169 can be located at a reinforced region of the car seat assembly, for example, the reinforced region 43 described herein with respect to Figs. 2A to 2G.

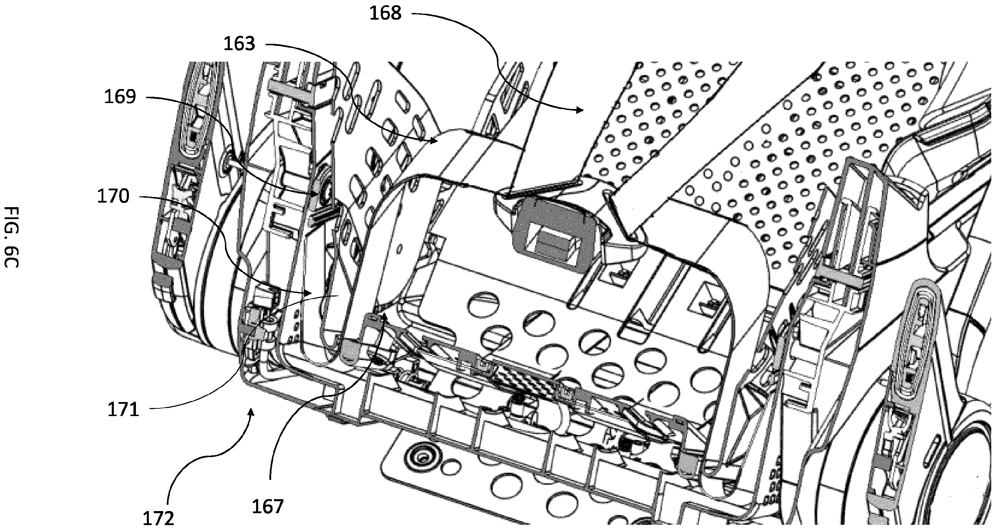

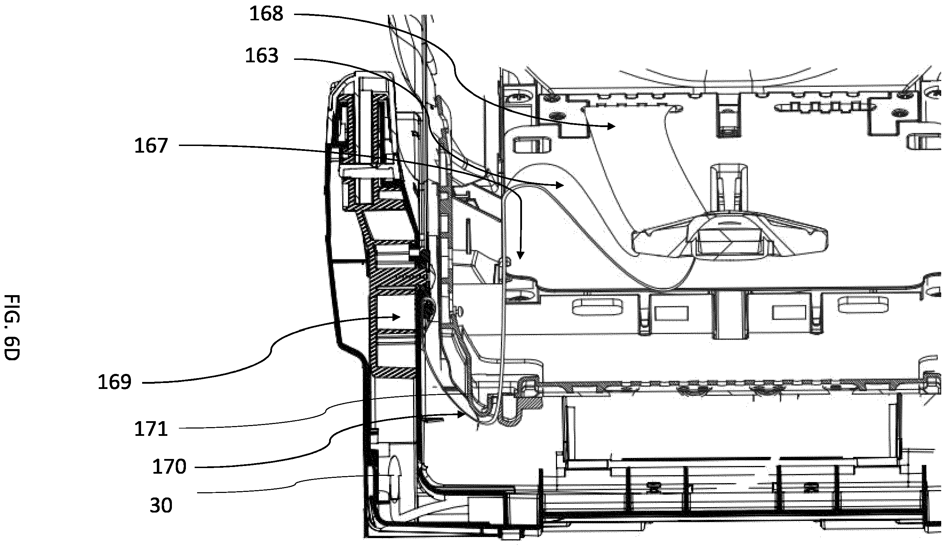

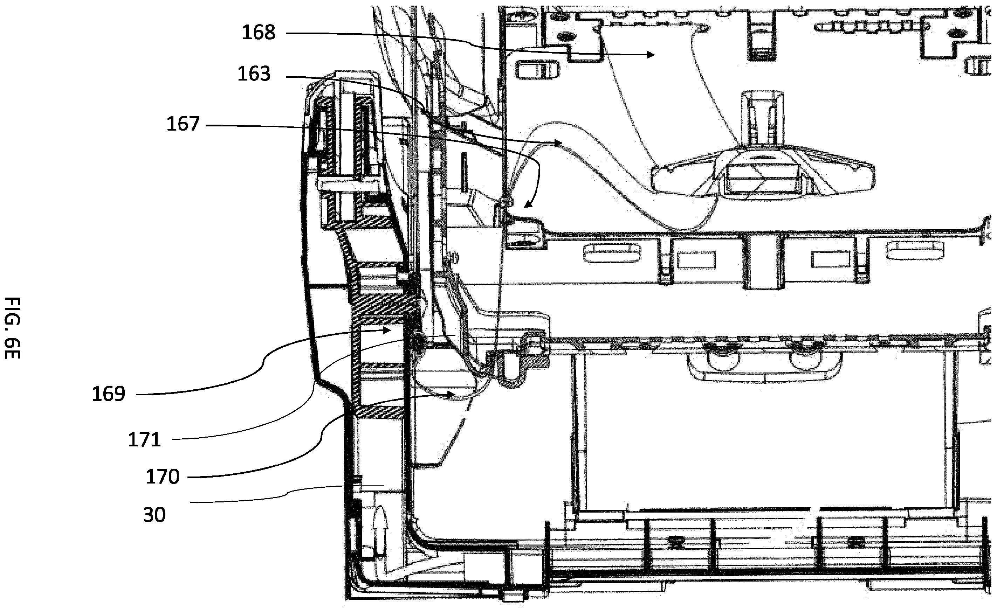

As can be best seen in Figs. 6C, 6D, and 6E, the fixing portion 170 extends about a moveable portion 171 of the upper seat 50, and is fixedly connected at the strap fixation portion 169 of the lower support 30. The moveable portion 171 is operable to move at least in upward and downward directions with respect to the lower support during manipulation of the upper seat 50 between the upright state and the extended state, thereby modifying the total strap path, as described in detail herein below.

As can be best seen in Fig. 6D, when the upper seat is in the upright state, the moveable portion 171 extends to a lower extent than the strap fixation portion 169 in the vertical direction while the side strap receiving slot 167 in the feet portion 54 is located higher than the strap fixation portion 169 in the vertical direction. This arrangement causes the fixing portion 170 to take an effective U-turn about the moveable portion 171.

When the upper seat is manipulated into the extended state (Fig. 6E), the moveable portion 171 moves upwards with respect to the lower support 30, and more particularly to the strap fixation portion 169, thereby shortening the path along which the fixing portion of the strap travels. It is to be understood herein that although in the extended state of the upper seat, the moveable portion 171 has been shown to be located lower than the strap fixation portion 169 in the vertical direction, it is not necessary, i.e., in some examples, the moveable portion 171 can move upwards to such an extent so as to be located higher than the strap fixation portion 169 in the vertical direction.

The shortening of the strap path makes a part of the fixing portion 170 available to be used for securing the infant, e.g. by being pulled in the direction of the front facing portion, thereby increasing the effective length of the securing portion 168, and decreasing the effective length of the fixing portion 170.

Upon manipulation of the upper seat 50 from the extended state to the upright state, the moveable portion 171 moves downwards, thereby increasing a length of the strap path. The strap is pulled on by the moveable portion, causing the effective length of the fixing portion 170 to be increased, and the effective length of the securing portion 168 to therefore decrease.

Accordingly, in the present example, the harness adjusting arrangement, generally designated as 172, is constituted by the arrangement of the fixing portion 170 of the strap 161, the strap fixation portion 169, the side strap receiving slot 167, and the moveable portion 171. Also, in the present example, the adjustment in effective length of the securing portion 168 initiates at the hip securing portions 163, i.e., it is at the hip securing portions 163 where the effective length of the securing portion 168 is adjusted first.

It is to be understood herein that the above description of the harness can apply to any seat assembly being a safety car seat or a stroller having an upper seat manipulable between an upright state and an extended state. It is to be further understood herein that the above description of the harness can apply to any car seat assembly, including but not limited to any one of those described e.g., in the Applicant's US8469389 and US9505321.

## Claims

1. A baby safety car seat assembly, comprising, at least in one operational mode thereof:
an upper seat having a feet portion and a backrest portion;
a lower support to which the upper seat is securely connected, the lower support having a front portion associated with the feet portion, a rear portion associated with the backrest portion, and right and left handle attachment areas;
at least one reinforced region located between the rear and front portions of the lower support, the at least one reinforced region having a material and/or a structure different than a remaining body of the lower support; the at least one reinforced region rendering the lower support stronger than the lower support would be if it was free of said at least one reinforced region;
at least one of said right and left handle attachment areas being located at least partially at the corresponding one of the at least one reinforced region;
a handle connected to the lower support at the handle attachment areas by a pivotable attachment which enables pivoting of the handle between a plurality of different positions; and
a car seat belt guiding member connected at least indirectly to the at least one reinforced region.

2. The baby safety car seat assembly according to Claim 1, wherein the at least one reinforced region comprises a belt guide connection portion to which the car seat belt guiding member is directly connected.

3. The baby safety car seat assembly according to Claim 1, wherein the car seat belt guiding member is formed as part of the handle, and located such that when a car seat belt is passed through, the car seat belt abuts on at least a top portion of the reinforced region, adjacent the car seat belt guiding member of the handle.

4. The baby safety car seat assembly according to any one of Claims 1-3, wherein the lower support further comprises right and left leg attachment areas, at least one of said right and left leg attachment areas being located at least partially at the corresponding one of the at least one reinforced region; the assembly further comprising legs having distal ends with wheels, and proximal ends which are connected at least indirectly to the lower support at said leg attachment areas, the legs being manipulable between a storage state in which the assembly is suitable for being mounted on a supporting surface, and an operational state allowing the seat assembly to be rolled by means of said wheels; and
wherein the right handle attachment area and the right leg attachment area overlap; the left handle attachment area and the left leg attachment area overlap; and
wherein the right and left handle attachment areas and the right and left leg attachment areas are fully located at the corresponding one of the at least one reinforced region.

5. The baby safety car seat assembly according to any one of Claims 1 to 4, wherein the at least one reinforced region extends further in a lateral direction as compared to the remaining body thereby constituting an outermost region of the lower support.

6. The baby safety car seat assembly according to any one of Claims 1 to 5, wherein the lower support comprises side walls located between the rear portion and the front portion, and the at least one reinforced region comprises two reinforced regions respectively located at said side walls.

7. A convertible baby safety car seat assembly comprising, at least in one operational mode thereof:
a seat having a left-side leg attachment area and a right-side leg attachment area;
a horizontal reference plane passing through a lowermost area of the seat;
legs having wheels at their corresponding distal ends, the legs being pivotable between a storage state, in which at least the wheels are located above the reference plane and the assembly is suitable for being positioned on a supporting surface, and an operational state, in which at least the wheels are located below the reference plane so as to enable the seat assembly to be rolled by means of said wheels;
said legs constituting a left pair of legs including a left rear leg and a left front leg and a right pair of legs including a right rear leg and a right front leg, at least one leg of the left pair of legs and at least one leg of the right pair of legs being pivotable from the storage state to the operational state at least partially under the influence of gravity; and
a leg manipulation damping mechanism for damping at least a part of the pivoting movement, compared with that in which said at least one leg of each pair would pivot in the absence of the leg manipulation damping mechanism, thereby slowing and smoothening the pivoting movement of said at least one leg of each pair.

8. The convertible baby safety car seat assembly according to Claim 7, wherein the leg manipulation damping mechanism comprises a rack and pinion arrangement.

9. The convertible baby safety car seat assembly according to any one of Claims 7 and 8, further comprising a locking mechanism operable to lock the left rear leg with respect to the left front leg, and the right rear leg with respect to the right front leg, causing the legs of each pair to move together at least during said part of said pivoting movement; said locking mechanism being operable to unlock the legs of each of said pairs of legs from each other after the completion of said part of the pivoting movement.

10. The convertible baby safety car seat assembly according to Claim 9, wherein said leg manipulation damping mechanism is operable only along said part of said pivoting movement.

11. The convertible baby safety car seat assembly according to any one of Claims 7 to 10, wherein the leg manipulation damping mechanism is operable only during pivoting of the legs from the storage state to the operational state, and not vice versa.

12. The convertible baby safety car seat assembly according to claim 7, further comprising a handle connected to the seat by a pivotable attachment which enables pivoting of the handle between a plurality of different positions, wherein the leg manipulation damping mechanism is operable during pivoting of the legs, independently of pivoting of the handle.

13. A baby safety car seat assembly comprising, at least in an operational mode thereof:
an upper seat having a feet portion and a backrest portion; the feet portion and the backrest portion being manipulable between an upright state, in which the backrest and feet portions form a first angle therebetween, and an extended state, in which the backrest and feet portions form a second angle therebetween, greater than the first angle; the upper seat comprising two, right and left backrest strap receiving slots; and two, right and left side strap receiving slots;
a five-point harness for securing a baby in the upper seat when the baby is seated therein, the harness comprising: a central buckle, and at least one strap slidably passing through the strap receiving slots of the upper seat and connectable to the central buckle, the at least one strap comprising a securing portion available to be used for securing the baby in the upper seat and a fixing portion unavailable to be used for securing the baby; and
a harness adjusting arrangement operable to adjust an effective length of at least the securing portion of the at least one strap upon manipulation of the upper seat between the upright state and the extended state, wherein adjustment is initiated at the right and left side receiving slots.

14. The baby safety car seat assembly according to Claim 13, wherein the securing portion comprises: shoulder securing portions; hip securing portions; and a crotch securing portion; and wherein the hip securing portions are adjusted first.

15. The baby safety car seat assembly according to any one of Claims 13 and 14, wherein the strap extends along a total strap path, said harness adjusting arrangement being operable to modify the total strap path upon manipulation of the upper seat between the upright state and the extended state, for adjusting the effective length of the securing portion of the at least one strap.

16. The baby safety car seat assembly according to Claim 15, comprising a moveable part operable to move upon manipulation of the upper seat between the upright state and the extended state, said strap extending at least partially over the moveable part such that the moveable part constitutes at least a part of the total strap path, said moveable part constituting at least partially the harness adjusting arrangement, wherein said movement of the moveable part modifies the total strap path thereby adjusting the effective length of the securing portion of the at least one strap.

17. The baby safety car seat assembly according to Claim 16, wherein movement of the moveable part modifies the total strap path at two spaced apart locations adjacent the right and left side receiving slots.

18. The baby safety car seat assembly according to any one of Claims 13 to 17, wherein the upper seat comprises a front-facing portion for seating the baby therein and an opposite rear-facing portion, said strap receiving slots establishing connection paths between said front-facing and rear-facing portions, wherein the at least one strap is slidably passed through the strap receiving slots between the front-facing and rear-facing portions with the securing portion being positioned at the front-facing portion and the fixing portion being positioned at the rear-facing portion.
